# EUROPÄISCHE PATENTSCHRIFT

(11) **EP 0 065 643 B1**
(45) Veröffentlichungstag und Bekanntmachung des Hinweises auf die Patenterteilung: **03.07.1985**
(21) Anmeldenummer: 82103295.0
(22) Anmeldetag: 20.04.1982
(51) Int. Cl.: C08G 77/54, C08G 77/26, C08G 77/38, B01J 41/12

(54) **Polymere Ammoniumverbindungen mit kieselsäureartigem Grundgerüst, ihre Herstellung und Verwendung**
Polymeric ammonium compounds with a silica-like structure, process for producing them and their use
Composés d'ammonium polymères ayant une structure du type de celle de l'acide silicique, procédé de préparation et leur emploi

(30) Priorität: 21.05.1981 DE 3120195
(43) Veröffentlichungstag der Anmeldung: 01.12.1982
(73) Patentinhaber: Degussa Aktiengesellschaft, 60311 Frankfurt (DE)
(72) Erfinder: Panster, Peter, Dr., D-6458 Rodenbach (DE); Kleinschmit, Peter, Dr., D-6450 Hanau 9 (DE)

## Beschreibung

Die Erfindung betrifft neue polymere Ammoniumverbindungen mit einem kieselsäureartigen Grundgerüst, die gegenüber den bekannten polymeren Ammoniumverbindungen auf organischer Basis eine Reihe von Vorteilen besitzen. Gleichzeitig werden Verfahren zur Herstellung und Verwendung dieser neuen Produkte beschrieben.

An organische Polymere gebundene Ammoniumverbindungen finden in der chemischen Synthese, Anwendung und Technik breiten Einsatz insbesondere als lonenaustauscher, Katalysatorträger, Wirkstoffträger allgemein und heterogene Phasentransferkatalysatoren. Beispiele für diese Verwendungen sind z.B. in Übersichtsform in Ullmanns Enzyklopädie der technischen Chemie, 4. Auflage, Bd. 13, S. 279 oder Chem. Ing. Tech. 51, 7, 728 (1979), in den DE-OS 1 800 371 und 1 800 379 oder in J. Amer. Chem. Soc. 97, 5956 (1975) beschrieben.

Bei Einsatz dieser Verbindungen erfüllt die organische Polymermatrix in einigen Fällen weitgehend die an sie gestellten Anforderungen in bezug auf thermische und mechanische Stabilität, Inertness gegen- überchemischen Angriffen, Zugänglichkeit der funktionellen Gruppen und Löslichkeit im verwendeten Solvens. In zahlreichen anderen Fällen treten jedoch Schwierigkeiten aufgrund der Tatsache auf, dass das organische, keine festliegende Struktur aufweisende Matrixgerüst nur bis maximal ca. 130 ° C stabi) ist, chemisch zu rasch abgebaut wird, im verwendeten Reaktionsmedium zu stark quillt, angelöst wird, verklebt, die funktionellen Gruppen überhaupt nicht zugänglich sind oder eine relativ rasche Aminabspaltung stattfindet, da das N-Atom nur über eine Kohlenwasserstoffgruppierung an die Polymermatrix gebunden ist. Die bekannten Polymeren dieser Art weisen darüber hinaus einen gravierenden Nachteil noch insofern auf, als im Hinblick auf die immer knapper werdenden Erdöl- und Kohlevorräte eine Verfügbarkeit geeigneter Rohstoffe auf längere Sicht nicht unbedingt gewährleistet ist, so dass generell eine Umstellung dieser Systeme auf eine anorganische Matrix, hergestelltaus nahezu unbegrenzt vorhandenen Rohstoffen wünschenswert wäre. Anorganische Polymersysteme, wie z.B. pyrogene oder gefällte Kieselsäure, Aluminiumoxid, Titandioxid usw., besitzen daneben auch andere Vorzüge wie festliegende starre Struktur, Unquellbarkeit, hohe Temperatur- und Alterungsbeständigkeit, Unlöslichkeit und leichte Zugänglichkeit der eventuell vorhandenen funktionellen Gruppen, da diese meist an der Oberfläche sitzen. Unter diesen Gesichtspunkten erscheint es verständlich, dass bereits versucht wurde, wie in der DE-OS 2 433 409 beschrieben, durch Fixierung geeigneter Gruppierungen an anorganische Trägermaterialien wie Kieselgel oder Aluminiumoxid Ammoniumgruppen-haltige Polymersysteme mit optimalen anwendungstechnischen Eigenschaften zu erhalten, was im Hinblick auf die nur sehr begrenzte Funktionalisierbarkeit nur sehr bedingt gelingt, denn entsprechende lonenaustauscher besitzen nur eine Kapazität von 0,5 mval/g.

Vor kurzer Zeit konnten nun erstmals polymere Amine mit einem kieselsäureartigen Grundgerüst synthetisiert werden, die sich im Gegensatz zu an anorganische Träger gebundene Amine durch einen hohen Grad an Funktionalisierbarkeit, d.h. durch einen nahezu optimalen Stickstoffgehalt pro Gewichtseinheit, auszeichnen und in der Teilchengrössenverteilung optimal einstellbar sind, so dass polymere Amine zur Verfügung stehen, die gegenüber den bekannten Typen auf organischer oder anorganischer Basis in vorstehend dargelegter Hinsicht eine Reihe von Vorteilen aufweisen (DE-A-3 120 214 = EP-A-0 066 074). Es konnte jetzt gefunden werden, dass durch Umsetzung dieser neuen polymeren Amine mit Protonensäuren oder Organylhalogenid neue polymere Ammoniumverbindungen erhalten werden können, die die erwarteten Eigenschaften, wie festliegende Struktur, Nichtquellbarkeit, eine hohe Temperaturbeständigkeit von über 200°C, Unlöslichkeit, gute Zugänglichkeit der funktionellen Gruppen und hohe Inertness gegenüber einer Aminabspaltung besitzen und bei den eingangs genannten Anwendungen einsetzbar sind.

Überraschend ist im Fall dieser erfindungsgemässen polymeren Ammoniumverbindungen insbesondere die Tatsache, dass die Quartärisierung der entsprechenden polymeren Amine in Abhängigkeit von deren Anzahl Si-Atome pro N-Atom zu unterschiedlichen Produkten in der Form führt, dass bei 2 Si-Atomen pro quartärisiertem N-Atom in heissem Wasser lösliche und bei 3 oder 4 Si-Atomen pro N-Atom auch in Wasser total unlösliche Produkte erhalten werden. Letztere sind deshalb naturgemäss als bevorzugt anzusehen.

Nach einem zweiten erfindungsgemässen Verfahren gelingt die Darstellung polymerer Ammoniumverbindungen ebenfalls. Dieser zweite Weg sieht zunächst die primäre Umsetzung geeignet substituierter monomerer Amine mit Organylhalogenid oder Protonensäure vor und erst dann die Hydrolyse und Kondensation der gebildeten Quartärsalze. Weitere Vertreter erfindungsgemässer polymerer Ammoniumverbindungen können nach einem dritten Weg, nämlich durch einfachen lonenaustausch an nach einem der beiden vorstehend genannten Varianten erhaltenen Polymerverbindungen dargestellt werden.

Nach all diesen Verfahren lassen sich polymere Ammoniumverbindungen herstellen, die in ihren physikalischen Eigenschaften speziellen Kieselgelen oder modifizierten Kieselsäuren ähneln, welche die nach vollständiger Abspaltung der an den monomeren Vorprodukten vorhandenen hydrolysierbaren Gruppen zu erwartende analytische Zusammensetzung besitzen und deren chemisches Verhalten bestätigt, dass die Struktur und Funktionalität der Ammoniumeinheiten durch die Überführung in die Polymerform nicht verändert wird. Die genannten Verfahren werden nachfolgend noch näher erläutert. Die Matrix dieser polymeren Ammoniumverbindungen lässt sich quasi massgeschneidert herstellen, indem Heteroatome wie Aluminium oder Titan in die Matrix eingebracht werden können oder generell die Ammoniumgruppendichte verringert werden kann oder die lonenselektivität durch den Grad der Vernetzung bei Verwendung als Ionenaustauscher beeinflusst werden kann.

Gekennzeichnet sind alle erfindungsgemässen polymeren Ammoniumverbindungen dadurch, dass sie aus Einheiten der allgemeinen Formel (1) 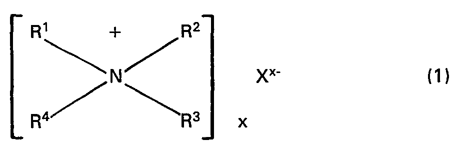 aufgebaut sind, in der R^{l} und R² für eine Gruppe der allgemeinen Formel (2) stehen, 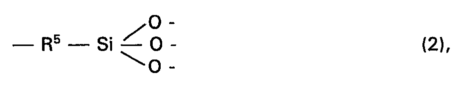 wobei
R⁵ = Alkylen mit 1 bis 10 C-Atomen oder Cycloalkylen mit 5 bis 8 C-Atomen oder Reste der Formeln 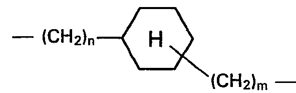 bzw. 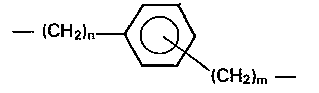
n = 1 bis 6 (am Stickstoff)
m = 0 bis 6 (am Silizium)
R^{l} und R² gleich oder verschieden, wobei die freien Valenzen der Sauerstoffatome
entweder durch Siliciumatome weiterer Gruppen der Formel (2)
oder durch Siliciumatome weiterer Gruppen der Formel (2) und durch vernetzende Brückenglieder 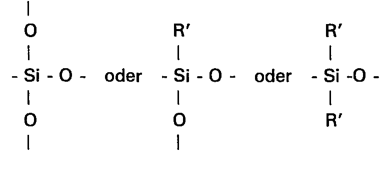 bzw. 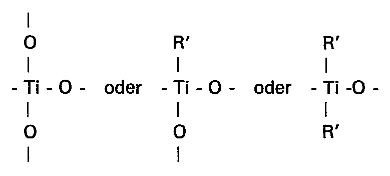 bzw. 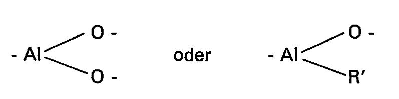
oder nur durch vernetzende Brückenglieder dieser Art abgesättigt sind;
R' = Methyl oder Ethyl;
Verhältnis der Siliciumatome in (2) zu den Brückenatomen Silicium, Titan, Aluminium = 1 : 0 bis 1 : 10; _{R}³ und R⁴ = R^{l} oder R² oder Wasserstoff, eine lineare oder verzweigte Alkylgruppe mit 1 bis 20 C-Atomen oder eine Cycloalkylgruppe mit 5 bis 8 C-Atomen oder die Benzylgruppe;
X = anorganisches oder organisches, 1 - bis 3wertiges Anion einer anorganischen oder organischen Protonensäure, die mit Aminbasen stabile Salze zu bilden imstande ist oder die Hydroxylgruppe und x = 1 bis 3.

Es hat sich gezeigt, dass R⁵ eine lineare oder verzweigte Alkylengruppe sein kann ohne dass erhebliche stoffliche Unterschiede des Endprodukts auftreten.

Typische Beispiele für das Anion X sind Halogenid, Hydroxid, Hypochlorit, Sulfat, Hydrogensulfat, Nitrit, Nitrat, Phosphat, Dihydrogenphosphat, Hydrogenphosphat, Carbonat, Hydrogencarbonat, Chlorat, Perchlorat, Chromat, Dichromat, Cyanid, Rhodanid, Sulfid, Hydrogensulfid, Selenid, Tellurid, Borat, Metaborat, Azid, Tetrafluoroborat, Tetraphenylborat, Hexafluorophosphat, Acetat, Propionat, Oxalat, Trifluoracetat, Trichloracetat oder Benzoat.

Typische Beispiele für Einheiten erfindungsgemässer polymerer Ammoniumverbindungen sind

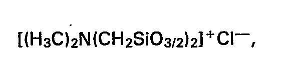

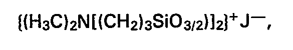

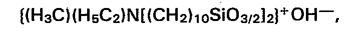

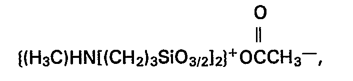

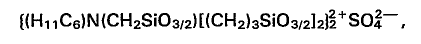

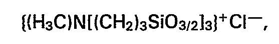

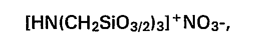

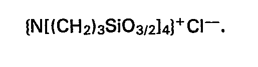

Besonders bevorzugt sind vom Gesichtspunkt der thermischen Stabilität und der Inertness gegenüber chemischen Angriffen, insbesondere Basen gegenüber, sowie in bezug auf Unlöslichkeit die polymeren Ammoniumverbindungen nach Formel (1), wobei R¹, R² und R³ die gleiche Bedeutung haben und insbesondere dann, wenn R¹, R² und R³ miteinander identisch sind. Nach einer vorzugsweisen Ausführungsform der Erfindung sind R¹, R² und R³ miteinander identisch, R⁴ gleich Methyl und X gleich Chlorid, Bromid oder Jodid.

R' bis R³ können miteinander identisch sein und R⁴ kann die gleiche Bedeutung haben wie R bis R³ oder mit R¹ bis R³ identisch sein und X kann gleich Chlorid, Bromid oder Jodid sein.

Besondere Vorteile bezüglich der Verfügbarkeit der Ausgangsmaterialien und der stofflichen Eigenschaften der polymeren Ammoniumverbindung liegen bei einer Verbindung, aufgebaut aus Polymereinheiten der Formel 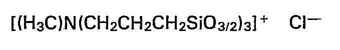 vor.

Aus denselben Gründen ist auch eine polymere Ammoniumverbindung, aufgebaut aus Polymereinheiten der Formel 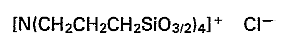 vorteilhaft.

Die auch als Gegenstand der Erfindung anzusehenden Verfahren zur Herstellung der polymeren Ammoniumverbindungen gestalten sich in der Praxis in einem Fall in der Weise, dass eine polymere, gegebenenfalls vernetzte und/oder in situ gebildete Aminbase als Ausgangsstoff verwendet wird. Dieses Verfahren zur Herstellung von polymeren Ammoniumverbindungen mit kieselsäureartigem Grundgerüst besteht darin, dass eine polymere Aminbase, bestehend aus Polymereinheiten der allgemeinen Formel (3), 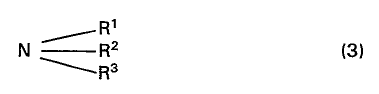 in der R^{l} bis R³ den Bedeutungsumfang wie in Anspruch 1 hat, innerhalb von Stunden oder Tagen, mit stöchiometrischen oder überschüssigen Mengen eines linearen oder verzweigten, 1 bis 20 C-Atome enthaltenden Alkylhalogenids, eines 5 bis 8 C-Atome enthaltenden Cycloalkylhalogenids oder Benzylhalogenids oder mit einer anorganischen oder organischen Protonensäure, die mit dem Amin stabile Quartärsalze zu bilden imstande ist, umsetzt, bis alle zugänglichen N-Atome quartärisiert sind, die gebildete polymere Ammoniumverbindung von der flüssigen Phase abtrennt, den verbleibenden Feststoff gegebenenfalls unter Verwendung von Vakuum trocknet, gegebenenfalls mahlt und klassifiziert.

Es hat sich dabei als günstig erwiesen, die Quartärisierung unter Verwendung eines Suspensionsmediums wie Wasser, Alkane, Cycloalkane, Aromaten, cyclische oder offenkettige Ether, Chlorkohlenwasserstoffe, aliphatische oder aromatische Nitroverbindungen, aliphatische oder aromatische Nitrile oder Dimethylformamid, Dimethylsulfoxid, Aceton, Diethylketon, Methylethylketon, niedere Alkohole wie Methanol, Ethanol, n- und i-Propanol, n-, i- und t-Butanol oder n-Pentanol oder Gemischen daraus, insbesondere Wasser/Alkohol-Gemischen durchzuführen. Das Suspensionsmedium soll als Lösungsvermittler wirken und seine Wahl hängt jeweils auch von den physikalischen Eigenschaften des Organylhalogenids ab. Dieses sollte nämlich zur Vermeidung von Verunreinigungen entweder gasförmig sein oder sich in dem verwendeten Lösungsvermittler zumindest teilweise lösen.

Am besten wird die Quartärisierung unterhalb, bei oder oberhalb Raumtemperatur bis zu einer Temperatur von 300°C bei Normaldruck oder Überdruck, der der Summe der Partialdrucke der einzelnen Komponenten der Reaktionsmischung bei der jeweiligen Temperatur entspricht, durchgeführt. Nach vollzogener Quartärisierung wird der Feststoff nach gängigen Techniken, wie Filtrieren, Zentrifugieren und/oder Dekantieren oder durch Abdestillieren, gegebenenfalls unter Verwendung von Vakuum, von eventuell vorhandenem Lösungsmittel oder überschüssigem Organylhalogenid bzw. von überschüssiger Protonensäure befreit und danach von gegebenenfalls noch anhaftenden Resten durch Ausheizen bei Normaldruck oder im Vakuum befreit. Anschliessend kann bei Temperaturen von Raumtemperatur bis 300°C, gegebenenfalls unter Verwendung von Vakuum, getrocknet und nach Bedarf gemahlen und klassifiziert werden. Zur Erhöhung der Stabilität der Matrix erweist es sich oft als sinnvoll, eine Temperung des Produkts durchzuführen. Dies geschieht durch eine Temperaturbehandlung über einen Zeitraum von mindestens einer Stunde bis zu vier Tagen bei 200 - 400°C und gegebenenfalls unter Verwendung von Vakuum.

Ein weiteres generelles Verfahrensprinzip gemäss der Erfindung zur Herstellung eines Teils der polymeren Ammoniumverbindungen geht aus von den monomeren Vorstufen, die in an sich bekannter Weise durch Quartärisierung geeignet substituierter primärer, sekundärer und tertiärer (Trialkoxisilylorganyl)-(organyl)amine mit Organylhalogenid erhalten werden.

Die Quartärisierung kann dabei in Reinsubstanz oder unter Verwendung eines Lösungsvermittlers mit bevorzugt polarer Natur, durchgeführt werden. Als besonders geeignet hat es sich erwiesen, dass die Quartärisierung des Amins unter Verwendung eines Lösungsmittels, wie cyclische oder offenkettige Ether, Chlorkohlenwasserstoffverbindungen, aliphatische oder aromatische Nitroverbindungen, aliphatische oder aromatische Nitrile oder Dimethylformamid, Dimethylsulfoxid, Aceton, Diethylketon, Methylethylketon, niedere Alkohole wie Methanol, Ethanol, n- und i-Propanol, n-, i- und t-Butanol oder n-Pentanol oder Gemischen daraus durchgeführt wird. Das gebildete Quartärsalz wird anschliessend, gegebenenfalls nach Zusatz eines Vernetzers, hydrolysiert und kondensiert, und zwar bevorzugt bei Raumtemperatur bis Rückflusstemperatur des Reaktionsgemisches.

Nach einer Variante dieser Methode kann in einigen Fällen auch so vorgegangen werden, dass der Reaktionsmischung vor dem Quartärisierungsvorgang eine, bezogen auf vollständige Hydrolyse und Kondensation stöchiometrische oder überschüssige Menge Wasser zugesetzt wird, da Aminkomponente und Organylhalogenidkomponente für sich zwar in dem Wasser-Lösungsvermittler-Gemisch löslich sind, das gebildete hydrolysierte und polykondensierte Quartärsalz jedoch unlöslich ist und ausfällt. Dies ist insbesondere dann der Faii, wenn ein tertiäres, mit nur einem Trialkoxisilylorganyl-Rest substituiertes Amin mit einem Halogenorganyltrialkoxisilan umgesetzt wird. Ebenso kann die Quartärisierung mit anorganischen oder organischen Protonensäuren auch mit einer wässrigen Lösung derselben vorgenommen werden.

Das in beiden Fällen erhaltende polymere Produkt kann anschliessend analog zum erstgenannten Verfahren aufgearbeitet werden. Es kann also eine Trocknung erfolgen, und zwar gegebenenfalls im Vakuum, wobei eine Temperatur zwischen Raumtemperatur und 300°C angewandt werden kann. Das getrocknete Produkt kann auch, gegebenenfalls unter Verwendung von Vakuum, getempert werden, und zwar während mindestens einer Stunde bis zu vier Tagen bei einer Temperatur im Bereich von 200 - 400°C.

Nachfolgend werden die für die Verarbeitung primärer, sekundärer und tertiärer Ausgangsamine zweckmässigsten Verfahrensvarianten im einzelnen vorgestellt.

Nach einer Ausführungsform erhält man die polymeren Ammoniumverbindungen mit kieselsäureartigem Grundgerüst dadurch, dass man ein primäres Amin mit einem Substituenten bestehend aus einer, jeweils mit einer Trialkoxisilylgruppe mit 1 bis 5 C-Atomen enthaltenden Alkoxiresten verbundenen linearen oder verzweigten Alkylengruppe mit 1 bis 10 C-Atomen, einer Cycloalkylengruppe mit 5 bis 8 C-Atomen oder eine Gruppe 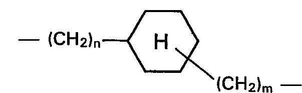 bzw. 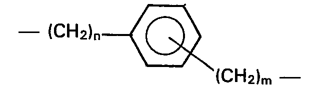
n = 1 bis 6
m=0bis6

gegebenenfalls in einem Lösungsvermittler, mit einem Halogenorganyltrialkoxisilan mit 1 bis 5 C-Atome enthaltenden Alkoxigruppen umsetzt, wobei als Organylgruppierung eine lineare oder verzweigte Alkylengruppe mit 1 bis 10 C-Atomen, eine Cycloalkylengruppe mit 5 bis 8 C-Atomen oder eine Gruppe 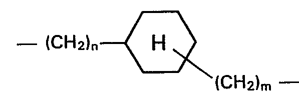 bzw. 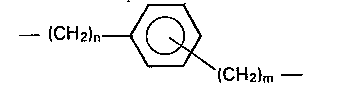
n = 1 bis 6 (am Halogen)
m = 0 bis 6
eingesetzt wird,

das gebildete Quartärsalz durch Reaktion mit, bezogen auf quantitative Hydrolyse und Kondensation, stöchiometrischen oder überschüssigen Mengen Wasser, gegebenenfalls nach vorherigem Zusatz eines Lösungsvermittlers, vorzugsweise in Gestalt eines zu den jeweils Si-ständigen Alkoxigruppen korrespondierenden Alkohols und/oder eines Vernetzers der allgemeinen Formel
Me(OR)₂-₄R'₀-₂ bzw. Me(OR)₂-₃R'₀-₁ wobei Me = Si oder Ti bzw. Al,
R ein Alkoxirest mit 1 bis 5 C-Atomen und R' eine Methyl- oder Ethylgruppe ist, hydrolysiert und polykondensiert, das Produkt von der flüssigen Phase abtrennt, gegebenenfalls unter Verwendung von Vakuum trocknet, gegebenenfalls mahlt und klassifiziert.

Ein weiteres Verfahren geht von einem sekundären Amin aus und ist dadurch gekennzeichnet, dass man ein sekundäres Bis(trialkoxisilylorganyl)amin mit einem Halogenorganyltrialkoxisilan, deren Organylgruppen R⁵ in Formel (2) entsprechen, oder einem 1 bis 20 C-Atome enthaltenden linearen oder verzweigten Alkylhalogenid, einem 5 bis 8 C-Atome enthaltenden Cycloalkylhalogenid oder Benzylhalogenid oder mit anorganischer oder organischer Protonensäure umsetzt. Zur weiteren Aufarbeitung können die vorstehend erwähnten Massnahmen, wie Trocken, Mahlen, Klassifizieren und Tempern in beliebiger Reihenfolge herangezogen werden.

Eine weitere Variante geht ebenfalls von einem sekundären Amin aus und sieht vor, dass man ein solches Amin mit Substituenten, bestehend aus einer Trialkoxisilylorganylgruppe und einer linearen oder verzweigten, 1 bis 20 C-Atome enthaltenden Alkylgruppe.oder einer 5 bis 8 C-Atome enthaltenden Cycloalkylgruppe oder einer Benzylgruppe mit einem Halogenorganyltrialkoxisilan, wobei die Organylgruppen der Gruppe R⁵ in Anspruch 1 entsprechen, quartärisiert. Die weitere Aufarbeitung kann wie bei den vorstehend behandelten Verfahrensvarianten erfolgen.

Bei Verwendung eines tertiären Amins als Ausgangsmaterial können die im folgenden beschriebenen vorteilhaften Ausführungsformen herangezogen werden. Eine dieser Ausführungsformen sieht vor, dass man ein tertiäres Tris(trialkoxisilylorganyl)amin, dessen Organylgruppen der Gruppe R⁵ in Anspruch 1 entsprechen und dessen Alkoxigruppen 1 bis 5 C-Atome aufweisen, mit einem linearen oder verzweigten, 1 bis 20 C-Atome enthaltenden Alkylhalogenid oder mit einem 5 bis 8 C-Atome enthaltenden Cycloalkylhalogenid, mit Benzylhalogenid oder mit anorganischer oder organischer Protonensäure oder mit einem Halogenorganyltrialkoxisilan, dessen Organylgruppe der Gruppe R⁵ in Anspruch 1 entspricht, quartärisiert und ansonsten eine Aufarbeitung entsprechend den bereits behandelten Massnahmen vorsieht.

Man kann aber auch von einem tertiären Amin ausgehen, dessen Substituenten aus 2 Trialkoxisilylorganylresten, deren Organylgruppen der Gruppe R⁵ in Anspruch 1 entsprechen, und einer linearen oder verzweigten, 1 bis 20 C-Atome enthaltenden Alkylgruppe oder einer 5 bis 8 C-Atome enthaltenden Cycloalkylgruppe oder der Benzylgruppe bestehen, mit einem Halogenorganyltrialkoxisilan, dessen Organylgruppe der Gruppe R⁵ in Anspruch 1 entspricht, oder mit einem linearen oder verzweigten, 1 bis 20 C-Atome enthaltenden Alkylhalogenid, einem 5 bis 8 C-Atome enthaltenden Cycloalkylhalogenid, oder mit Benzylhalogenid oder mit anorganischer oder organischer Protonensäure quartärisiert und ansonsten eine Aufarbeitung entsprechend den bereits vorgestellten Massnahmen anschliesst.

Des weiteren besteht eine Ausführungsvariante darin, dass man ein tertiäres Amin, dessen Substituenten aus 1 Trialkoxisilylorganylrest, dessen Organylgruppe der Gruppe R⁵ in Anspruch 1 entspricht, und 2 weiteren untereinander gleichen oder verschiedenen organischen Resten in Gestalt einer linearen oder verzweigten, 1 bis 20 C-Atome enthaltenden Alkylgruppe und/oder einer 5 bis 8 C-Atome enthaltenden Cycloalkylgruppe und/oder der Benzylgruppe bestehen mit einem Halogenorganyltrialkoxisilan, dessen Organylgruppe der Gruppe R⁵ in Anspruch 1 entspricht, quartärisiert und ansonsten nach den bereits vorgestellten Möglichkeiten weiteraufarbeitet.

Bei all diesen Verfahrensweisen werden mit Vorteil die bereits bei der allgemeinen Vorstellung des zweiten Verfahrensprinzips angeführten Reaktions-und Nachbehandlungsbedingungen angewandt. Insbesondere kann auch hier die Trocknung, gegebenenfalls im Vakuum, bei Raumtemperatur bis 300°C erfolgen und es kann, gegebenenfalls unter Verwendung von Vakuum, eine Temperung während eines Zeitraums von mindestens einer Stunde bis zu vier Tagen bei einer Temperatur zwischen 200 - 400°C vorgesehen werden.

Nach einem weiteren Verfahren gemäss der Erfindung sind alle übrigen polymeren Ammoniumverbindungen zugänglich, die nicht auf dem direkten Weg der Quartärisierung (Verfahrensprinzip 1) bzw. der Quartärisierung und Hydrolyse/Kondensation (Verfahrensprinzip 11) erhalten werden. Darunter fallen alle polymeren Ammoniumverbindungen, die vollständig mit Organyl- und Organylsilylgruppen oder nur mit Organylsilylgruppen substituiert sind und daneben andere Anionen als Halogenid aufweisen.

Demgemäss dient dieses Verfahren zur Herstellung der vorstehend behandelten polymeren Ammoniumverbindungen sowie derjenigen polymeren Ammoniumverbindungen, bei denen R³ und/oder R⁴ kein Wasserstoff ist und bei denen gleichzeitig das Anion kein Halogenid ist. Das Verfahren ist dadurch gekennzeichnet, dass man die quartärisierten, ungetrockneten, getrockneten und/oder getemperten, vollständig mit Organyl- und Organosilylgruppen oder auch nur vollständig mit Organosilylgruppen substituierten polymeren Ammoniumverbindungen mit einem anorganischen oder organischen Reagenz, welches in ein Kation und Anion dissoziieren kann, zum gegenseitigen Austausch der Anionen nach dem statischen oder dynamischen lonenaustauscherprinzip umsetzt, anschliessend wäscht und gegebenenfalls dann den Feststoff von der flüssigen oder auch gasförmigen Phase (beispielsweise bei Ersatz des CI- durch J- aus HJ) vollständig abtrennt und ihn gegebenenfalls trocknet sowie in beliebiger Reihenfolge mahlt, klassifiziert und tempert.

Dieses lonenaustauschverfahren beinhaltet auch einen lonenaustausch in Gestalt einer Neutralisation wie er bei bereits bekannten lonenaustauscherharzen nach dem statischen oder dynamischen Prinzip vollzogen werden kann.

Man kann alsoden lonenaustausch in einer bewegten Suspension der polymeren Ausgangs-Ammoniumverbindung mit dem zumindest teilweise gelösten Reaktionspartner durchführen. Dabei wird die unlösliche polymere Ammoniumverbindung in wässriger Suspension oder einem organischen Suspensionsmedium bevorzugt polarer Natur mit derjenigen, wenigstens teilweise gelösten Reaktionskomponente, mit der der Austausch durchgeführt werden soll, in Kontakt gebracht. Anschliessend wird der Feststoff abgetrennt und gegebenenfalls nochmals mit frischer Lösung des Reaktionspartners gerührt. Dieser Vorgang wird so oft wiederholt, bis der lonenaustausch quantitativ vollzogen ist. Anschliessend kann der Feststoff nach gängigen Techniken, wie Filtrieren, Zentrifugieren und/oder Dekantieren abgetrennt, salzfrei gewaschen und bei Raumtemperatur oder erhöhter Temperatur bis 300°C, gegebenenfalls unter Verwendung von Vakuum getrocknet, bei einer Temperatur von 200 - 400°C getempert, gemahlen sowie klassifiziert werden.

Arbeitet man nach dem dynamischen Prinzip, so setzt man die polymere Ausgangs-Ammoniumverbindung als Austauscherbett ein und bringt sie mit der Lösung des zumindest teilweise gelösten Reaktionspartners in Kontakt. Auch hier können wie bei den nach der statischen Methode erhaltenen Produkten Nachbehandlungen im erwähnten Umfang vorgesehen werden.

Im allgemeinen können die nach der Trocknung noch durchgeführten Behandlungsschritte auch in der Reihenfolge vertauscht sein oder können teilweise unterbleiben.

Verwendet man als Austauscherbett eine Austauschersäule, so muss, um einen ausreichenden Durchfluss zu gewährleisten, das polymere Ausgangsprodukt eine bestimmte Mindestkorngrösse besitzen, die auch in Abhängigkeit von der Säulendimension festzulegen ist. Im allgemeinen wird man bei Laborsäulen mit einer Mindestkorngrösse von 0,2 mm auskommen. Nach vollzogenem Austausch wird auch hier salzfrei gewaschen und es können dann entweder Nachbehandlungsmassnahmen oder weitere Austauschmassnahmen durchgeführt werden. Eine Mahlung der polymeren Ammoniumverbindungen kann natürlich nicht nur in trockenem Zustand, sondern auch nass durchgeführt werden, und zwar direkt nach oder auch vor der Quartärisierung bzw. nach der Polykondensation.

Auf der Fähigkeit der polymeren Ammoniumverbindungen zum Anionenaustausch basiert die wichtigste Anwendung dieser neuen Produkte, nämlich der Einsatz als universell nutzbarer Anionenaustauscher, der neben den Vorteilen der sehr temperatur-und lösungsmittelstabilen Matrix, der stark fixierten und gegenüberAblösen inerten Ammoniumgruppen, der Nichtquellbarkeit in wässrigem und organischem Medium, der Einsetzbarkeit in organischen Medien, der guten Gewichtskapazität und der sehr guten Volumenkapazität auch den Vorteil hat, mit Ammoniak in die Hydroxidform überführt werden zu können, was im Falle der bekannten Ionenaustauscher nur sehr bedingt möglich ist.

Demgemäss ist auch Gegenstand der Erfindung die Verwendung der polymeren Ammoniumverbindungen als Anionenaustauscher.

Charakterisieren lassen sich die beschriebenen neuen polymeren Ammoniumverbindungen insbesondere anhand der Mengenbilanzen bei der Herstellung (es wird stets vollständig hydrolysiert und kondensiert), der Elementaranalysen, die der Stöchiometrie meist sehr genau entsprechen und anhand der Anionenaustauscherergebnisse. Ihre Zersetzungspunkte liegen an der Luft bei weit über 200°C und unter Schutzgasatmosphäre bei ca. 400°C. Je nach Vorbehandlung besitzen die polymeren Ammoniumverbindungen Oberflächen von 0,1 bis 2000 m²/g und Teilchengrössendurchmesser von ca. 1 cm bis 1 µm. Ein Teilchengrössenbereich von 0,1 - 1,5mm, wie er bei einer technischen Verwendung als lonenaustauscher gefordert wird, ist problemlos einstellbar.

Die Erfindung wird nachfolgend anhand von Ausführungsbeispielen zu den einzelnen erfindungsgemässen Herstellungsvarianten unter Berücksichtigung der grundsätzlich wichtigsten Ausgangsstoffe näher erläutert.

### Beispiel 1

Eine Lösung von 218,73 g (7,04 Mol) CH₃NH₂ in 1700 ml Ethanol wurde bei angenähert Raumtemperatur binnen 1 Stunde mit 2093,20 g (6,3 Mol) J-CH₂CH₂CH₂Si(OC₂H₅)₃ versetzt und anschliessend 20 Stunden unter Rückfluss erhitzt. Danach wurde auf 50°C abgekühlt, eine Lösung von 574,89 g (8,45 Mol) NaOC₂H₅ in 3 1 Ethanol binnen 1 Stunde zugesetzt und nochmals 2 Stunden unter Rückfluss gerührt. Nach destillativer Entfernung des vorhandenen Alkohols und überschüssigen Methylamins am Rotationsverdampfer wurden 1,5 1 Diethylether zugesetzt, die schwerlöslichen Salze am Druckfilter abfiltriert, mit 250 ml Diethylether gewaschen und der Diethylether wiederum auf destillativem Wege entfernt. Die verbleibende Flüssigkeit wurde zunächst von einer geringen Menge zweiter Phase, die sich in Form eines viskosen Öls am Boden des Gefässes befand, abgetrennt und anschliessend fraktioniert destilliert. Das gewünschte Produkt H₃CN[CH₂CH₂CH₂Si(OC₂H₅)₃]₂ ging bei einem Druck von 0,8 mbar bei einer Temperatur von 150 - 152°C über. Die Ausbeute, berechnet nach Gl. (1) und (11) in der Beschreibung, betrug mit 983,48 g 71 % der Theorie. Das Produkt wurde in 1 I Ethanol gelöst und bei 50 - 55°C unter leichtem Rühren innerhalb von 15 min mit 1 I entsalztem Wasser versetzt. Die Mischung wurde dann auf Rückflusstemperatur aufgeheizt, wobei der Inhalt schlagartig zu einer puddingartigen Masse erstarrte, die im Verlauf des weiteren 3stündigen Rührens zu einer feinen Suspension dispergiert wurde. Anschliessend erfolgten Abfiltration des Feststoffs, mehrmaliges Auswaschen mit insges. 5 I Wasser, 12stündige Trocknung des Produkts bei 150°C/100 mbar und Vermahlung an einer Stiftmühle. Bei vollständiger Hydrolyse und Kondensation des eingesetzten Monomerprodukts waren 486,15 g polymeres Produkt zu erwarten; erhalten werden konnten 485,2 g, das entspricht 99,8% der Theorie.

Die Suspension von 150,0 g dieses polymeren Amins, bestehend aus Einheiten der Formel (H₃C)N-(CH₂CH₂CH₂Si0_{3/2})₂, in 500 ml Toluol wurde binnen 30 min mit 293,9 g Methyljodid versetzt und anschliessend 24 Stunden unter Rückfluss gerührt. Der Feststoff wurde abzentrifugiert, mit 2 x 150 ml Toluol gewaschen und 12 Stunden bei 150°C/100 mbar getrocknet. Es konnten 236,5 g (95,4% d. Th.) einer polymeren Ammoniumverbindung, aufgebaut aus Einheiten der Formel [(H₃C)₂N(CH₂CH₂CH₂-SiO_{3/2}]⁺ J―, erhalten werden. Diese Formel konnte durch eine Gegenüberstellung der zu erwartenden und der tatsächlich gefundenen Analysenwerte bestätigt werden.

### Anal^{y}sendaten:

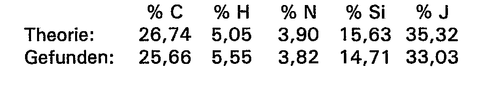

### Beispiel 2

300 g (2,32 Mol) Octylamin wurden binnen 2 Stunden unter Rühren bei 50°C mit 493,58 g (2,32 Mol) Chlormethyltriethoxisilan versetzt. Das Gemisch wurde anschliessend 30 Stunden bei 180°C gerührt, dann auf Raumtemperatur abgekühlt und mit 157,88 g (2,32 Mol) NaOC₂H₅, gelöst in 1 I Ethanol, binnen 30 min versetzt. Es wurde weitere 2 Stunden bei Rückflusstemperatur gerührt, dann der anwesende Alkohol abdestilliert, der Feststoff abfiltriert, mit n-Hexan nachgewaschen und das n-Hexan wiederum auf destillativem Wege entfernt. Mit der verbleibenden Flüssigkeit wurde ein Dünnschichtverdampfer beschickt, an dem bei einer Heizmanteltemperatur von 120°C und einem Vakuum von 0,8 mbar das bei der Deprotonierung freigewordene Octylamin und geringe Mengen anderer leichterflüchtiger Verunreinigungen über Kopf entfernt wurden.

Das erhaltene Sumpfprodukt wurde direkt mit 0,6 I Toluol gemischt, auf 60°C erwärmt und unter Rühren mit 500 ml Wasser binnen 20 min versetzt. Es wurde noch 1 Stunde bei derselben Temperatur gerührt, in deren Verlauf sich ein gelblich-weisser Niederschlag bildete. Dieser wurde anschliessend noch 4 Stunden bei Rückflusstemperatur gerührt, dann abfiltriert, zunächst mit Ethanol, dann mit viel Wasser gewaschen und anschliessend bei 120°C/ 100 mbar 24 Stunden lang getrocknet. Es konnten 306,99 g (102,0% d. Th.) polymeres Produkt, aufgebaut aus Einheiten der Formel CsH₁₇N(CH₂-Si0₃₁₂)₂, erhalten werden.

200 g von dieser polymeren Base wurden zunächst an einer Stiftmühle gemahlen und anschliessend mit 744,4 g 1 -Bromoctan vereinigt. Dieses Gemisch wurde dann 52 Stunden lang bei 130 - 1400C gerührt. Der Feststoff wurde abzentrifugiert, 3 x mit insgesamt 1 I Diethylether gewaschen und 24 Stunden bei 130°C/100 mbar getrocknet. Es konnten 328,7 g (94,2% d. Th.) polymeres Produkt, bestehend aus Einheiten der Formel [(C₈H₁₇)₂N(CH₂-Si0_{3/2})₂1⁺Br- erhalten werden.

### Analysendaten:

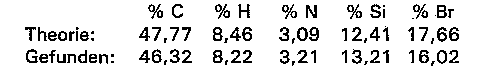

### Beispiel 3

160,0 g eines aus Benzylamin und 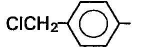 Si(OC₂H₅)₃ analog zu Beispiel 2 hergestellten polymeren, an der Stiftmühle vermahlenen Amins, aufgebaut aus Einheiten der Formel 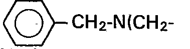 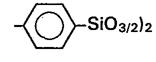 und 204,0 g Methyljodid wurden in 350 ml Monoethylenglykoldimethylether 43 Stunden unter Rückfluss gerührt.

Anschliessend wurde abzentrifugiert, der Feststoff mit 2 x 200 ml Monoethylenglykoldimethylether nachgewaschen und 12 Stunden bei 120°C/ 100 mbar getrocknet. Es liessen sich 214,2 g (98,3% d. Th.) einer polymeren Ammoniumverbindung, bestehend aus Einheiten der Formel 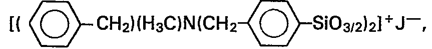 erhalten.

### Analysendaten:

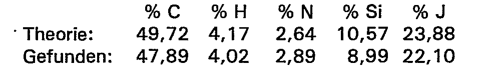

### Beispiel 4

Zu 896,4 g (5,0 Mol) H₂N-CH₂CH₂CH₂Si(OCH₃)₃ wurden binnen 1,5 Stunden bei Raumtemperatur 993,6 g (5,0 Mol) Cl-CH₂CH₂CH₂Si(OCH₃)₃ zugetropft. Die Mischung wurde anschliessend auf 150°C aufgeheizt, 15 Stunden bei dieser Temperatur gerührt, dann auf Raumtemperatur abgekühlt, erst mit 1 I getrocknetem Methanol und dann chargenweise mit 270,1 g (5,0 Mol) NaOCHₛ versetzt. Nach weiteren 3 Stunden Rühren unter Rückfluss erfolgte die Abfiltration des gebildeten Natriumchlorids. Dieses wurde mit insgesamt 800 ml Methanol ausgewaschen. Nach Vereinigung der Waschlösung mit der Produktmischung wurde das Methanol auf destillativem Wege bei 60 - 80°C Sumpftemperatur und 50 mbar Druck entfernt und mit der verbleibenden Flüssigkeit ein Sambay-Verdampfer beschickt. Als Kopfprodukt konnten 402,5 g H₂N-CH₂CH₂-CH₂Si(OCH₃)₃ zurückgewonnen werden. Der Sumpf wurde mit 1 I Methanol versetzt und unter Rühren auf 50°C aufgeheizt. Dann wurden hierzu im Verlauf von 30 min 2 1 Wasser zugesetzt. Bereits nach Zugabe eines Teils des Wassers setzte die spontane Polykondensation des Amins ein. Unter langsamem Rühren wurde auf Rückflusstemperatur aufgeheizt und 2 Stunden refluxiert.

Nach Abkühlung auf Raumtemperatur wurde in das Reaktionsgefäss ein Tauchrohr eingebracht, durch das bei einer Sumpftemperatur von 70 ° C über einen Zeitraum von 20 Stunden insgesamt 500 g Methylchlorid durch die Reaktionsmischung geleitet wurden. Der Feststoff wurde dann über eine Saugnutsche abfiltriert, mit 1 I entsalztem Wasser gewaschen, 12 Stunden im Vakuumtrockenschrank bei 150°C/80 mbar getrocknet, anschliessend an einer Kreuzschlagmühle gemahlen und in die Korngrössenbereiche 0,25 - 0,50 mm, 0,1 - 0,25 mm und < 0,1 mm klassifiziert. Die Gesamtauswaage betrug 977,9 g (101,2% d. Th.) an polymerer Ammoniumverbindung, bestehend aus Einheiten der Formel
[(H₃C)N (CH₂CH₂CH₂SiO_{3/2})₃]⁺ Cl―

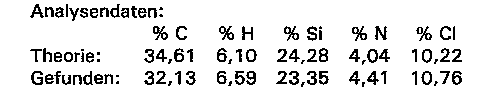

Die Produkt-Korngrössenfraktion von 0,25 - 0,5 mm besass eine spezifische Oberfläche von 80 m²/g. Gemäss einer DSC-Untersuchung zersetzte sich eine Produktprobe an der Luft ab einer Temperatur von 241 °C und unter Schutzgasatmosphäre ab einer Temperatur von 416°C.

### Beispiel 5

100 g der analog zu Beispiel 4 hergestellten polymeren Base, bestehend aus Einheiten der Formel N(CH₂CH₂CH₂SiO_{3/2})₃, und 277,0 g i-Butylbromid wurden in 500 ml Toluol vereinigt. Das Gemisch wurde 6 Tage unter Rückfluss gerührt und anschliessend analog zu Beispiel 1 aufgearbeitet. Es konnten 129,9 g (88,9% d. Th.) einer polymeren Ammoniumverbindung, bestehend aus Einheiten der Formel [(H₃C)₂CH-CH₂-N(CH₂CH₂CH₂SiO_{3/2})₃]⁺Br―, erhalten werden.

### Analysendaten:

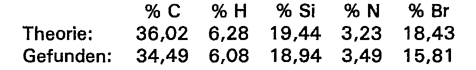

### Beispiel 6

150 g eines analog zu Beispiel 4 hergestellten polymeren Amins, bestehend aus Einheiten der Formel CH₃ I N(CH₂CHCH₂SiO_{3/2})₃, wurde 15 Stunden mit 120,0 g Benzylchlorid in 400 ml Toluol unter Rückfluss erhitzt. Anschliessend wurde analog zu Beispiel 1 aufgearbeitet. Es liessen sich 203,0 g (98,5% d. Th.) einer polymeren Ammoniumverbindung, bestehend aus Einheiten der Formel 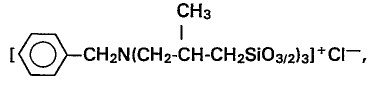 erhalten.

### Analysendaten:

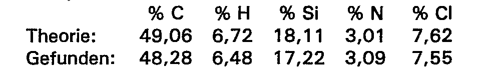

### Beispiel 7

75 g einer polymeren Base, aufgebaut aus Einheiten der Formel 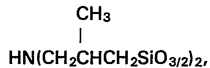 hergestellt durch Polykondensation des Monomerprodukts 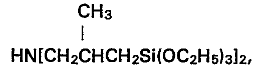 und 150,0 g Cyclohexylbromid wurden 48 Stunden in 100 ml Toluol unter Rückfluss erhitzt.

Nach Aufarbeitung wie nach Beispiel 1 wurden 123,8g (96,9% d. Th.) einer polymeren Ammoniumverbindung mit Einheiten der Formel 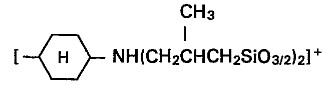 Br erhalten.

### Analysendaten:

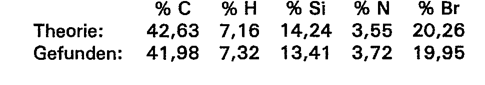

### Beispiel 8

1204 g (5,0 Mol) Cl-CH₂CH₂CH₂Si(OC₂H₅)₃ und 284,4 g (16,7 Mol) flüssiger NH₃ wurden in einem Hubautoklaven 24 Stunden lang bei 150°C zur Reaktion gebracht. Das gebildete Ammonchlorid wurde abfiltriert und mit insgesamt 300 ml n-Hexan ausgewaschen. Nach Vereinigung von Waschflüssigkeit und Filtrat wurde zunächst das n-Hexan am Rotationsverdampfer entfernt. Mit dem verbleibenden Sumpf wurde ein Dünnschichtverdampfer beschickt, an dem bei einer Manteltemperatur von 150°C und einem Druck von 0,8 mbar leichtflüchtige Bestandteile entfernt wurden. Als schwerflüchtige Fraktion verblieben 760,0 g N[CH₂CH₂CH₂8i-(OC₂H₅)₃]₃, die mit 750 ml Ethanol und 251,3 g Si(OC₂Hₛ)₄ versetzt wurden. Nach Aufheizen auf 70°C wurde hierzu unter langsamem Rühren 1 I Wasser binnen 1 Stunde zugesetzt. Es wurde noch 1 Stunde bei dieser Temperatur und dann 3 Stunden unter Rückfluss gerührt. Anschliessend wurde das gebildete tertiäre, vernetzte Amin analog zu Beispiel 4 unter Durchleiten von insgesamt 300 g Methylchlorid quartärisiert und aufgearbeitet. Es konnten 501,3 g (102,1% d. Th.) an polymerer vernetzter Ammoniumverbindung mit Einheiten der Formel [(H₃C)N(CH₂CH₂CH₂SiO_{3/2})₃]⁺Cl―·SiO₂ erhalten werden.

### Analysendaten:

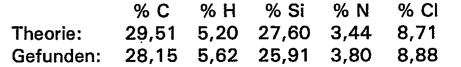

Die Korngrössenfraktion des Produkts mit 0,25 - 0,5 mm Teilchendurchmesser besass gemäss einer Oberflächenbestimmung am Areameter eine spezifische Oberfläche von 233 m²/g. Eine differentialkalorimetrische Untersuchung ergab eine beginnende exotherme Zersetzung an Luft ab 238°C und eine endotherme Zersetzung unter N₂-Atmosphäre ab 428°C.

### Beispiel 9

Eine Mischung aus 20 g der gemäss Beispiel 4 hergestellten, gemahlenen, polymeren Base, bestehend aus Einheiten der Formel N[CH₂CH₂CH₂SiO_{3/2}]₃, und 200 ml 1 n-HCI-Lösung wurde 4 Stunden lang in einem Becherglas bei Raumtemperatur gerührt. Anschliessend wurde der Feststoff abfiltriert, mit entsalztem Wasser neutral gewaschen und 12 Stunden bei 120°C/80 mbar getrocknet. Es konnten 22,4 g (99,7% d. Th.) einer polymeren Ammoniumverbindung mit Einheiten der Formel [HN(CH₂CH₂CH₂-SiO_{3/2})₃]⁺Cl― erhalten werden.

### Analysendaten:

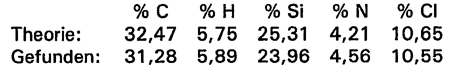

### Beispiel 10

Die Behandlung von 20 g polymerer Base, bestehend aus Einheiten der Formel N(CH₂CH₂CH₂-Si0₃₁₂)₃, mit 200 ml 1 n-Essigsäure analog zu Beispiel 9 führte quantitativ zu einer polymeren Ammoniumverbindung mit Einheiten der Formel

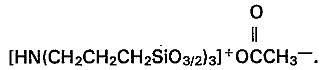

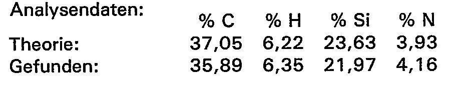

### Beispiel 11

Aus 1075,7 g (6,0 Mol) H₂N-CH₂CH₂CH₂Si-(OCH₃)₃, 1192,3 g (6,0 Mol) CI-CH₂CH₂CH₂Si-(OCH₃)₃ und 444,8 g (3,0 Mol) (C₂H₅)₂Si(OCH₃)₂ analog zu Beispielen 4 und 8 erhaltene 1137,5 g (95,1 % d. Th.) polymeres Produkt, bestehend aus Polymereinheiten der Formel N[CH₂CH₂CH₂SiO_{3/2}]₃ ·(C₂H₅)₂SiO, wurden in 2 I Toluol suspendiert. Bei Rückflusstemperatur wurden über einen Zeitraum von 20 Stunden insgesamt 989,2 g Methylchlorid durchgeleitet. Nach Aufarbeitung wie nach Beispiel 1 wurden 1245,7 g (97,2% d. Th.) polymeres Produkt, mit Einheiten der Formel
[(H₃C)N(CH₂CH₂CH₂SiO_{3/2})₃]⁺Cl―(C₂H₅)₂SiO erhalten.

### Analysendaten:

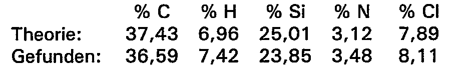

### Beispiel 12

Zu 125,3 g (0,40 Mol) in 150 ml Ethanol vorgelegtes und auf 80°C erhitztes Br-(CH₂)₈-Si(OCH₃)₃ wurden binnen 30 min 53,8 g (0,3 Mol) H2N-(CH₂)₃-Si(OCH₃)₃ zugetropft. Es wurde noch eine weitere Stunde unter Rückfluss gerührt und dann zu der klaren auf 30°C abgekühlten Lösung 200 ml Wasser binnen 30 min zugetropft. Der sich im Verlauf des weiteren 2stündigen Rührens bildende Niederschlag wurde abfiltriert, mit 3 x 100 ml Ethanol und 0,5 I Wasser gewaschen und anschliessend 8 Stunden bei 120°C/80 mbar getrocknet.

Es konnten 94,7 g (89,1 % d. Th.) polymere Ammoniumverbindung mit Einheiten der Formel (H₂N[CCH₂)₈SiO_{3/2}] [(CH₂)₃SiO_{3/2}]}⁺Br― erhalten werden.

### Analysendaten:

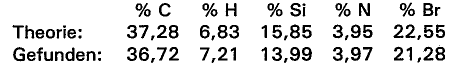

### Beispiel 13

101,1 g (0,35 Mol) 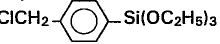 und 94,3 g (0,35 Mol) 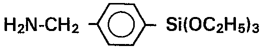 wurden analog zu Beispiel 12 umgesetzt. Vor der Zugabe des Wassers zu der auf Raumtemperatur abgekühlten Lösung der Monomerverbindung (H₂N[CH₂ 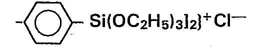 wurde diese noch mit 79,8 g (0,35 Mol) Ti(OC₂H₅)₄ versetzt. Anschliessend wurde wie nach Beispiel 12 weiter verfahren. Es liessen sich auf diese Weise 132,7 g (91,2% d. Th.) einer polymeren Ammoniumverbindung, bestehend aus Einheiten der angenäherten Formel [H₂N- 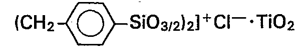 erhalten.

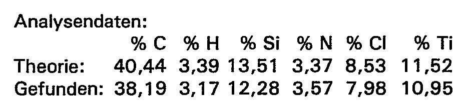

### Beispiel 14

148,0 g (0,51 Mol) J-CH₂CH₂CH₂Si(OCH₃)₃ wurden in 100 ml Methanol gelöst. Zu dieser auf Rückflusstemperatur erhitzten Lösung wurden unter Rühren 170,8 g (0,5 Mol) HN[CH₂CH₂CH₂Si(OCH₃)₃]₂ binnen 1 Stunde zugetropft. Nach beendeter Zugabe wurde noch eine weitere Stunde unter Rückfluss gerührt.

Die auf Raumtemperatur abgekühlte Lösung wurde dann binnen 30 min mit 200 ml Wasser versetzt und noch weitere 2 Stunden gerührt. Der gebildete Niederschlag wurde abfiltriert, mit Methanol und Wasser gewaschen und 24 Stunden bei 120°C/100 mbar getrocknet. Es konnten 196,3 g (92,5% d. Th.) der erwarteten polymeren Ammoniumverbindung mit Einheiten [HN(CH₂CH₂CH₂SiO_{3/2})₃]⁺ J― erhalten werden.

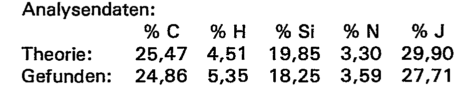

### Beispiel 15

Eine Lösung von 100 g (0,22 Mol) des Monomerprodukts 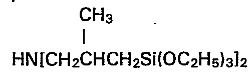 in 100 ml Ethanol wurde unter Rühren, binnen 1 Stunde, bei Raumtemperatur mit 250 ml 2n, wässriger HCI-Lösung versetzt. Es wurde noch weitere 3 Stunden bei Raumtemperatur gerührt, dann der gebildete Feststoff abfiltriert, mit 4 I Wasser säurefrei gewaschen und anschliessend 8 Stunden bei 130°C/80 mbar getrocknet. Es liessen sich 56,8 g (96,4% d. Th.) an polymerer Ammoniumverbindung mit Einheiten der Formel 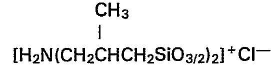 erhalten.

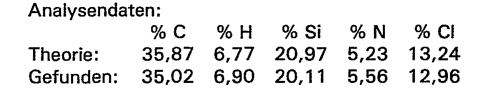

### Beispiel 16

Zu 150,6 g (0,46 Mol) auf 100°C erhitztes Br--CH₂CH₂CH₂Si(0-i-C₃H₇)₃ wurden unter kräftigem Rühren binnen 2 Stunden 138,2 g (0,40 Mol) 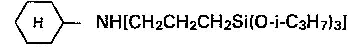 zugesetzt. Es wurde noch weitere 2 Stunden bei dieser Temperatur gerührt, dann auf Raumtemperatur abgekühlt, zunächst 300 ml Isopropanol und dann 200 ml Wasser binnen 1 Stunde zugesetzt. Es wurde noch 2 weitere Stunden gerührt, dann der gebildete Feststoff abzentrifugiert, zunächst mit 2 x 200 ml Isopropanol, dann mit 1 I Wasser gewaschen, bei 120°C/100 mbar 24 Stunden lang getrocknet und anschliessend 5 Stunden bei 200°C/100 mbar getempert. Es liessen sich 133,7 g (91,2% d. Th.) an polymerer Ammoniumverbindung, bestehend aus Einheiten der Formel [ SiO_{3/2})₂]⁺Br― erhalten.

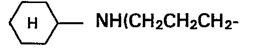

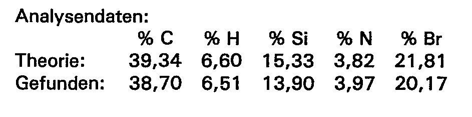

### Beispiel 17

201,5 g (0,4 Mol) auf 130°C erhitztes N[CH₂CH₂-CH₂Si(OCH₃)₃]₃ wurden unter Rühren binnen 2 Stunden mit 73,6 g (0,40 Mol) n-Butyljodid versetzt. Nach beendeter Zugabe wurde noch 8 Stunden bei 150°C gerührt und dann auf Raumtemperatur abgekühlt. Nach Zusatz von 300 ml Methanol wurden zur klaren Lösung 200 ml Wasser binnen 30 min zugetropft. Es wurde noch 1 Stunde bei Raumtemperatur und 2 Stunden unter Rückfluss gerührt, anschliessend der gebildete Feststoff in Suspension mit einem Dispergator gemahlen, abzentrifugiert, mit insgesamt 2 Wasser gewaschen, 12 Stunden bei 150°C getrocknet und 12 Stunden bei 250°C/100 mbar getempert.

Es konnten 184,3 g (95,9% d. Th.) an polymerer Ammoniumverbindung mit Einheiten der Formel [(C₄H₉)N(CH₂CH₂CH₂SiO_{3/2})₃]⁺J― erhalten werden.

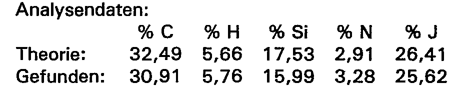

### Beispiel 18

Zu 161,3 g (0,32 Mol) auf 150°C erhitztes N-[CH₂CH₂CH₂Si(OCH₃)₃1ₐ wurden unter Rühren binnen 30 min 63,6 g (0,32 Mol) CI-CH₂CH₂CH₂Si-(OCH₃)₃ zugesetzt. Es wurde weitere 48 Stunden bei dieser Temperatur gerührt, dann die viskose Flüssigkeit auf Raumtemperatur abgekühlt und nach Zugabe von 200 ml Methanol sowie 300 ml Wasser und weiterem 3stündigen Erhitzen unter Rückfluss das polymere Produkt abzentrifugiert, mit 21 I Wasser gewaschen, 5 Stunden bei 150°C getrocknet und 12 Stunden bei 300°C/10 mbar getempert. Es liessen sich 122,3 g (89,7% d. Th.) polymere Ammoniumverbindung, bestehend aus Einheiten der Formel [N(CH₂CH₂CH₂SiO_{3/2})₄]⁺Cl― erhalten.

### Analvsendaten:

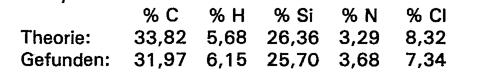

### Beispiel 19

Aus 188,4 g (0,53 Mol) (H₃C)N[CH₂CH₂CH₂Si-(OCH₃)₃1₂ und 153,8 g (0,53 Mol) J-CH₂CH₂CH₂-Si(OCH₃)₃ wurden analog zu Beispiel 17 226,3 g (97,4% d. Th.) an polymerer Ammoniumverbindung mit Einheiten der Formel
[(H₃C)N(CH₂CH₂CH₂SiO_{3/2})₃]⁺J― hergestellt.

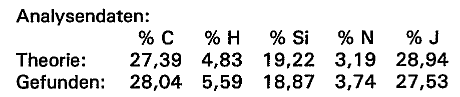

### Beispiel 20

Der Versuch gemäss Beispiel 19 wurde wiederholt. Vor der Hydrolyse und Polykondensation wurde die Lösung der monomeren Ammoniumverbindung mit 8,59 g (0,053 Mol) Al(OC₂H₅)₃ versetzt. Nachdem ansonsten weiter wie nach Beispiel 19 verfahren wurde, wurde eine vernetzte polymere Ammoniumverbindung mit Einheiten der Formel [(H₃C)N(CH₂CH₂CH₂SiO_{3/2})₃]⁺J―·0,1 A10₃₁₂ erhalten. Ausbeute: 233,2 g (99,2% d. Th.).

### Analvsendaten:

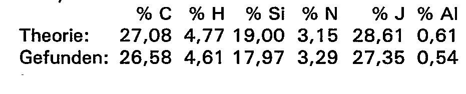

### Beispiel 21

220 g (1,06 Mol) auf 130°C erhitztes (H₃C)₂-NCH₂CH₂CH₂Si(OCH₃)₃ wurden unter Rühren binnen 1,5 Stunden mit 257,8 g (1,06 Mol) Br-CH₂-CH₂CH₂Si(OCH₃)₃ versetzt. Das Gemisch wurde noch 6 Stunden bei dieser Temperatur zur Reaktion gebracht, dann auf Raumtemperatur abgekühlt, zunächst 300 ml Methanol und schliesslich binnen 30 min. 200 ml Wasser zugegeben und weitere 2 Stunden gerührt. Der gebildete Feststoff wurde weiter wie nach Beispiel 17 behandelt. Es wurden 299,3 g (90,4% d. Th.) an polymerer Ammoniumverbindung mit Einheiten der Formel
[(H₃C)₂N(CH₂CH₂CH₂SiO_{3/2})₂]⁺Br⁻ erhalten.

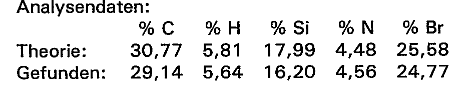

### Beispiel 22

25 g der nach Beispiel 1 hergestellten polymeren Ammoniumverbindung mit Einheiten der Formel [(H₃C)N(CH₂CH₂CH₂SiO_{3/2})₃]⁺CJ― wurden an einer Stiftmühle vermahlen. 20 g von diesem gemahlenen Produkt (52,05 m-Mol J- laut J―-Analyse) wurden in 5 Chargen mit insgesamt 2212 g 2%iger NaN0₃--Lösung (520,5 m-Mol 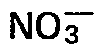 ) umgesetzt. Dies geschah in der Weise, dass das polymere Ammoniumjodid in einem Becherglas 5 mal mit jeweils 442,4 g dieser NaN0₃-Lösung jeweils 15 min. lang gerührt, anschliessend die überstehende Lösung abdekantiert und der verbleibende Feststoff mit frischer NaN0₃-Lösung versetzt wurde. Am Ende der mehrstufigen Umsetzung wurde der Feststoff mit 2 mal 100 ml Wasser gewaschen, 5 Stunden bei 130°C/ 100 mbar getrocknet und analysiert.

### Analysendaten:

% C % H % Si % J % 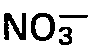 Vor 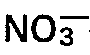 -Austausch:
25,66 5,55 14,71 33,03 - Nach 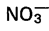 -Austausch: 31,42 6,09 18,28 0,81 20,11

Bei einem quantitativen J-/ 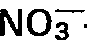 -Austausch und dem anschliessenden Vorliegen einer polymeren Ammoniumverbindung mit Einheiten der Formel [(H₃C)₂N(CH₂CH₂CH₂SiO_{3/2})₂]⁺NO^{―}₃ waren folgende Analysendaten zu erwarten:

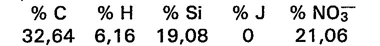

Entsprechend den ermittelten Analysendaten hat damit ein ca. 95 - 98%iger J-/ 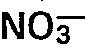 -Austausch stattgefunden. Dieses Ergebnis wurde durch eine J--Bestimmung in den vereinigten abdekantierten Lösungen bestätigt, denn hier befanden sich 96,7% des ursprünglich auf den 20 g Ausgangspolymervorhandenen Jodids.

### Beispiel 23

50 g der nach Beispiel 4 hergestellten polymeren Ammoniumverbindung mit einer Korngrösse von 0,25 - 0,5 mm und einem CI--Gehalt von 10,76% wurden in eine lonenaustauschersäule mit einem Durchmesser von 25 mm gefüllt. Die Füllhöhe an Polymer betrug sowohl im trockenen wie im anschliessenden wassergefüllten Zustand ca. 30 cm. Über diese Säule wurde die 10-fache molare Ammoniakmenge des auf dem Feststoff vorhandenen Chlorids, insgesamt 5,38 g (151,75 mMol), in 5 Chargen in Gestalt einer 1%igen NH₃-Lösung (insgesamt 2584,5 g) geschickt. Nach dem Auswaschen des Ionenaustauschers mit Wasser, bis neutrale Reaktion im Durchlauf festgestellt wurde, wurden Waschflüssigkeit und die 5 durchgelaufenen Chargen vereinigt, durch Verdampfen von Wasser aufkonzentriert und am klaren Konzentrat eine Chlorid-Bestimmung durchgeführt. Derzufolge befanden sich insgesamt 5,35 g (150,9 mmol) Chlorid in Lösung, was einem 99,4%igen CI-/OH--Austausch entspricht.

### Beispiel 24

Über die mit dem in der OH--Form vorliegenden lonenaustauscher befüllte Säule aus Beispiel 23 wurde wiederum in 5 Chargen die 10fache molare Menge Salzsäure des auf dem Feststoff vorhandenen Hydroxids in Gestalt einer 5%igen HCI-Lösung geschickt (insgesamt 1100,4 g Lösung). Nach dem anschliessenden Waschen des Säuleninhalts mit Wasser bis neutrale Reaktion im Durchlauf festzustellen war, wurde vom Säuleninhalt eine Probe genommen, die nach Trocknung auf den Chlorid-Gehalt untersucht wurde. Die Analyse ergab einen CI---Gehalt von 10,55%, so dass der durchgeführte OH-/Cl―-Austausch praktisch quantitativ stattgefunden hatte.

### Beispiel 25

50 g der nach Beispiel 8 hergestellten vernetzten polymeren Ammoniumverbindung, bestehend aus Einheiten der Formel
[(H₃C)N(CH₂CH₂CH₂SiO_{3/2})₃]⁺Cl―·SiO₂ mit einer Korngrösse von 0,25 - 0,5 mm und einem CI--Gehalt von 8,88% wurden analog zu Beispiel 23 mit der 5fachen molaren Na₂S0₄-Menge des auf dem Feststoff vorhandenen Chlorids, insgesamt 4,44 g, in Gestalt einer 5%igen Na₂S0₄-Lösung (insgesamt 1778,8 g) behandelt. Gemäss einer Cl―-Analyse im vereinigten Durchlauf hatte ein 98,9%iger Cl-/SO₄²⁻-Austausch stattgefunden.

## Patentansprüche

1. Polymere Ammoniumverbindungen mit kieselsäureartigem Grundgerüst, aufgebaut aus Einheiten der allgemeinen Formel 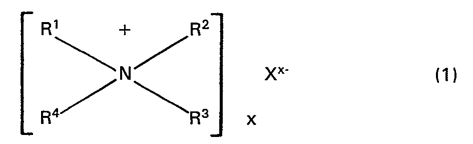
(R^{I} und R²=eine Gruppe der allgemeinen Formel (2) 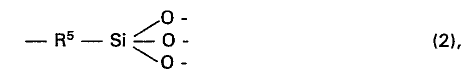
R⁵ = Alkylen mit 1 bis 10 C-Atomen oder Cycloalkylen mit 5 bis 8 C-Atomen oder Reste der Formeln 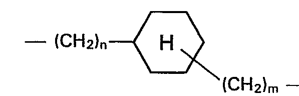 bzw. 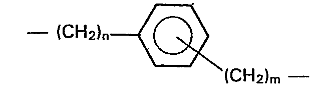
n = 1 bis 6 (am Stickstoff)
m = 0 bis 6 (am Silizium).
R¹ und R² gleich oder verschieden, wobei die freien Valenzen der Sauerstoffatome
entweder durch Siliciumatome weiterer Gruppen der Formel (2)
oder durch Siliciumatome weiterer Gruppen der Formel (2) und durch vernetzende Brückenglieder 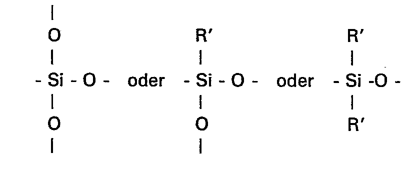 bzw. 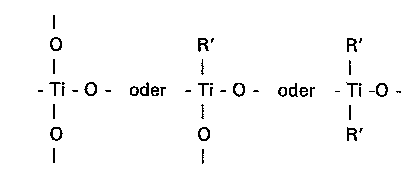 bzw. 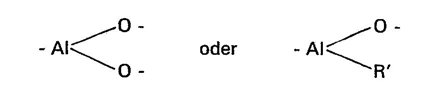 oder nur durch vernetzende Brückenglieder dieser Art abgesättigt sind;
R' = Methyl oder Ethyl;
Verhältnis der Siliciumatome in (2) zu den Brückenatomen Silicium, Titan, Aluminium = 1 : 0 bis 1 : 10; R³ und R⁴ = R^{l} oder R² oder Wasserstoff, eine lineare oder verzweigte Alkylgruppe mit 1 bis 20 C-Atomen oder eine Cycloalkylgruppe mit 5 bis 8 C-Atomen oder die Benzylgruppe;
X = anorganisches oder organisches, 1 - bis 3wertiges Anion einer anorganischen oder organischen Protonensäure, die mit Aminbasen stabile Salze zu bilden imstande ist, oder die Hydroxylgruppe und x = 1 bis 3).

2. Polymere Ammoniumverbindungen nach Anspruch 1, dadurch gekennzeichnet, dass R⁵ eine lineare oder verzweigte Alkylengruppe ist.

3. Polymere Ammoniumverbindungen nach Ansprüchen 1 und 2, dadurch gekennzeichnet, dass X für Halogenid, Hydroxid, Hypochlorit, Sulfat, Hydrogensulfat, Nitrit, Nitrat, Phosphat, Dihydrogenphosphat, Hydrogenphosphat, Carbonat, Hydrogencarbonat, Chlorat, Perchlorat, Chromat, Dichromat, Cyanid, Rhodanid, Sulfid, Hydrogensulfid, Selenid, Tellurid, Borat, Metaborat, Azid, Tetrafluoroborat, Tetraphenylborat, Hexafluorophosphat, Acetat, Propionat, Oxalat, Trifluoroacetat, Trichloracetat oder Benzoat steht.

4. Polymere Ammoniumverbindungen nach Ansprüchen 1 - 3, dadurch gekennzeichnet, dass R^{l}, R² und R³ miteinander identisch sind, R⁴ gleich Methyl und X gleich Chlorid, Bromid oder Jodid ist.

5. Polymere Ammoniumverbindungen nach Ansprüchen 1 - 3, dadurch gekennzeichnet, dass R^{l} bis R⁴ miteinander identisch sind und X gleich Chlorid, Bromid oder Jodid ist.

6. Polymere Ammoniumverbindungen nach Ansprüchen 1 - 4, aufgebaut aus Polymereinheiten der Formel

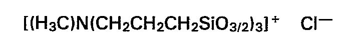

7. Polymere Ammoniumverbindungen nach Ansprüchen 1 - 3 und 5, aufgebaut aus Polymereinheiten der Formel

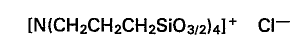

8. Verfahren zur Herstellung von polymeren Ammoniumverbindungen mit kieselsäureartigem Grundgerüst nach Ansprüchen 1 - 4 und 6, dadurch gekennzeichnet, dass eine polymere Aminbase, bestehend aus Polymereinheiten der allgemeinen Formel (3), 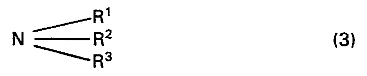
in der R¹ bis R³ den Bedeutungsumfang wie in Anspruch 1 hat,
innerhalb von Stunden oder Tagen, mit stöchiometrischen oder überschüssigen Mengen
eines linearen oder verzweigten, 1 bis 20 C-Atome enthaltenden Alkylhalogenids, eines 5 bis 8 C-Atome enthaltenden Cycloalkylhalogenids oder Benzylhalogenids oder mit einer anorganischen oder organischen Protonensäure, die mit dem Amin stabile Quartärsalze zu bilden imstande ist, umsetzt, bis alle zugänglichen N-Atome quartärisiert sind,
die gebildete polymere Ammoniumverbindung von der flüssigen Phase abtrennt, den verbleibenden Feststoff gegebenenfalls unter Verwendung von Vakuum trocknet, gegebenenfalls mahlt und klassifiziert.

9. Verfahren zur Herstellung von polymeren Ammoniumverbindungen nach Anspruch 8, dadurch gekennzeichnet, dass die Quartärisierung unter Verwendung eines Suspensionsmediums wie Wasser, Alkane, Cycloalkane, Aromaten, cyclische oder offenkettige Ether, Chlorkohlenwasserstoffe, aliphatische oder aromatische Nitroverbindungen, aliphatische oder aromatische Nitrile oder Dimethylformamid, Dimethylsulfoxid, Aceton, Diethylketon, Methylethylketon, niedere Alkohole wie Methanol, Ethanol, n- und i-Propanol, n-, i- und t-Butanol oder n-Pentanol oder Gemischen daraus, insbesondere Wasser/Alkohol-Gemischen durchgeführt wird.

10. Verfahren zur Herstellung von polymeren Ammoniumverbindungen nach Ansprüchen 8 oder 9, dadurch gekennzeichnet, dass die Quartärisierung unterhalb, bei oder oberhalb Raumtemperatur bis zu einer Temperatur von 300 °C bei Normaldruck oder Überdruck, der der Summe der Partialdrucke der einzelnen Komponenten der Reaktionsmischung bei der jeweiligen Temperatur entspricht, durchgeführt wird.

11. Verfahren zur Herstellung von polymeren Ammoniumverbindungen mit kieselsäureartigem Grundgerüst nach Ansprüchen 1 - 3, dadurch gekennzeichnet, dass man
ein primäres Amin mit einem Substituenten aus einer, jeweils mit einer Trialkoxisilylgruppe mit 1 bis 5 C-Atomen enthaltenden Alkoxiresten verbundenen linearen oder verzweigten Alkylengruppe mit 1 bis 10 C-Atomen, einer Cycloalkylengruppe mit 5 bis 8 C-Atomen oder einer Gruppe 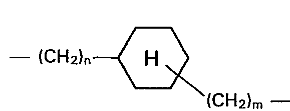 bzw. 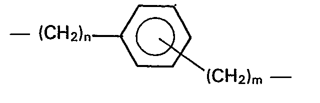
n = 1 bis 6
m = 0 bis ₆
gegebenenfalls in einem Lösungsvermittler, mit einem Halogenorganyltrialkoxisilan mit 1 bis 5 C-Atome enthaltenden Alkoxigruppen umsetzt, wobei als Organylgruppierung eine lineare oder verzweigte Alkylengruppe mit 1 bis 10 C-Atomen, eine Cycloalkylengruppe mit 5 bis 8 C-Atomen oder eine Gruppe 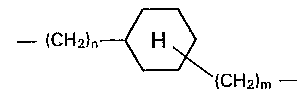 bzw. 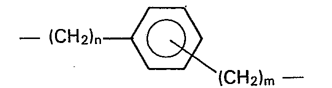
n = 1 bis 6 (am Halogen)
m == 0 bis 6
eingesetzt wird,
das gebildete Quartärsalz durch Reaktion mit, bezogen auf quantitative Hydrolyse und Kondensation, stöchiometrischen oder überschüssigen Mengen Wasser, gegebenenfalls nach vorherigem Zusatz eines Lösungsvermittlers, vorzugsweise in Gestalt eines zu den jeweils Si-ständigen Alkoxigruppen korrespondierenden Alkohols und/oder eines Vernetzers der allgemeinen Formel 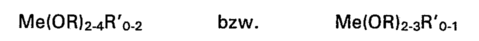
wobei Me = Si oder Ti bzw. Al,
R ein Alkoxirest mit 1 bis 5 C-Atomen und R' eine Methyl- oder Ethylgruppe ist, hydrolysiert und polykondensiert,
das Produkt von der flüssigen Phase abtrennt, gegebenenfalls unter Verwendung von Vakuum trocknet, gegebenenfalls mahlt und klassifiziert.

12. Verfahren zur Herstellung von polymeren Ammoniumverbindungen mit kieselsäureartigem Grundgerüst nach Ansprüchen 1 - 3, dadurch gekennzeichnet, dass man
ein sekundäres Bis(trialkoxisilylorganyl)amin mit einem Halogenorganyltrialkoxisilan, deren Organylgruppen R⁵ in Formel (2) entsprechen, oder einem 1 bis 20 C-Atome enthaltenden linearen oder verzweigten Alkylhalogenid, einem 5 bis 8 C-Atome enthaltenden Cycloalkylhalogenid oder Benzylhalogenid oder mit anorganischer oder organischer Protonensäure umsetzt
und weiter nach Anspruch 11 verfährt.

13. Verfahren zur Herstellung von polymeren Ammoniumverbindungen nach Ansprüchen 1 - 3, dadurch gekennzeichnet, dass man
ein sekundäres Amin mit Substituenten, bestehend aus einer Trialkoxisilylorganylgruppe und einer linearen oder verzweigten, 1 bis 20 C-Atome enthaltenden Alkylgruppe oder einer 5 bis 8 C-Atome enthaltenden Cycloalkylgruppe oder einer Benzylgruppe mit
einem Halogenorganyltrialkoxisilan, wobei die Organylgruppen der Gruppe R⁵ in Anspruch 1 entsprechen, quartärisiert
und ansonsten weiter wie nach Anspruch 11 verfährt.

14. Verfahren zur Herstellung von polymeren Ammoniumverbindungen nach Ansprüchen 1 - 7, dadurch gekennzeichnet, dass man
ein tertiäres Tris(trialkoxisilylorganyl)amin, dessen Organylgruppen der Gruppe R⁵ in Anspruch 1 entsprechen und dessen Alkoxigruppen 1 bis 5 C-Atome aufweisen, mit
einem linearen oder verzweigten, 1 bis 20 C-Atome enthaltenden Alkylhalogenid oder mit einem 5 bis 8 C-Atome enthaltenden Cycloalkylhalogenid, mit Benzylhalogenid oder mit anorganischer oder organischer Protonensäure oder mit einem Halogenorganyltrialkoxisilan, dessen Organylgruppe der Gruppe R⁵ in Anspruch 1 entspricht, quartärisiert
und ansonsten weiter nach Anspruch 11 verfährt.

15. Verfahren zur Herstellung von polymeren Ammoniumverbindungen nach Ansprüchen 1 - 4 und 6, dadurch gekennzeichnet, dass man ein tertiäres Amin, dessen Substituenten aus 2 Trialkoxisilylorganylresten, deren Organylgruppen der Gruppe R⁵ in Anspruch 1 entsprechen, und einer linearen oder verzweigten, 1 bis 20 C-Atome enthaltenden Alkylgruppe oder einer 5 bis 8 C-Atome enthaltenden Cycloalkylgruppe oder der Benzylgruppe bestehen, mit
einem Halogenorganyltrialkoxisilan, dessen Organylgruppe der Gruppe R⁵ in Anspruch 1 entspricht, oder mit einem linearen oder verzweigten 1 bis 20 C-Atome enthaltenden Alkylhalogenid, einem 5 bis 8 C-Atome enthaltenden Cycloalkylhalogenid, oder mit Benzylhalogenid oder mit anorganischer oder organischer Protonensäure quartärisiert
und ansonsten weiter wie nach Anspruch 11 verfährt.

16. Verfahren zur Herstellung von polymeren Ammoniumverbindungen nach Ansprüchen 1 - 3, dadurch gekennzeichnet, dass man
ein tertiäres Amin, dessen Substituenten aus 1 Trialkoxisilylorganylrest, dessen Organylgruppe der Gruppe R⁵ in Anspruch 1 entspricht, und 2 weiteren untereinander gleichen oder verschiedenen organischen Resten in Gestalt einer linearen oder verzweigten, 1 bis 20 C-Atome enthaltenden Alkylgruppe und/oder einer 5 bis 8 C-Atome enthaltenden Cycloalkylgruppe und/oder der Benzylgruppe bestehen mit einem Halogenorganyltrialkoxisilan, dessen Organylgruppe der Gruppe R⁵ in Anspruch 1 entspricht, quartärisiert
und ansonsten weiter wie nach Anspruch 11 verfährt.

17. Verfahren zur Herstellung von polymeren Ammoniumverbindungen nach Ansprüchen 11 - 16, dadurch gekennzeichnet, dass die Quartärisierung des Amins unter Verwendung eines Lösungsmittels (wie cyclische oder offenkettige Ether, Chlorkohlenwasserstoffverbindungen, aliphatische oder aromatische Nitroverbindungen, aliphatische oder aromatische Nitrile oder Dimethylformamid, Dimethylsulfoxid, Aceton, Diethylketon, Methylethylketon, niedere Alkohole wie Methanol, Ethanol, n-und i-Propanol, n-, i- und t-Butanol oder n-Pentanol oder Gemischen daraus) durchgeführt wird.

18. Verfahren zur Herstellung von polymeren Ammoniumverbindungen nach Ansprüchen 11 - 17, dadurch gekennzeichnet, dass die Quartärisierung unterhalb, bei oder oberhalb Raumtemperatur bis zu einer Temperatur von 300°C, bei Normaldruck oder Überdruck, der der Summe der Partialdrucke der einzelnen Komponenten der Reaktionsmischung entspricht, durchgeführt wird.

19. Verfahren zur Herstellung von polymeren Ammoniumverbindungen nach Ansprüchen 11 - 18, dadurch gekennzeichnet, dass die Hydrolyse und Kondensation der Quartärsalze bei Raumtemperatur bis Rückflusstemperatur des Reaktionsgemisches durchgeführt wird.

20. Verfahren zur Herstellung von polymeren Ammoniumverbindungen nach Ansprüchen 8 - 19, dadurch gekennzeichnet, dass, gegebenenfalls im Vakuum, bei Raumtemperatur bis 300°C getrocknet wird.

21. Verfahren zur Herstellung von polymeren Ammoniumverbindungen nach Ansprüchen 8 - 20, dadurch gekennzeichnet, dass, gegebenenfalls unter Verwendung von Vakuum, mindestens eine Stunde bis zu 4 Tagen bei 200 - 400°C getempert wird.

22. Verfahren zur Herstellung von polymeren Ammoniumverbindungen nach den Ansprüchen 1 - 7 und derjenigen polymeren Ammoniumverbindungen, bei denen R³ und/oder R⁴ kein Wasserstoff ist und bei denen gleichzeitig das Anion kein Halogenid ist, dadurch gekennzeichnet, dass man die quartärisierten, ungetrockneten, getrockneten und/oder getemperten, vollständig mit Organyl- und Organylsilylgruppen oder auch nur vollständig mit Organosilylgruppen substituierten polymeren Ammoniumverbindungen mit einem anorganischen oder organischen Reagenz, welches in ein Kation und ein Anion dissoziieren kann, zum gegenseitigen Austausch der Anionen nach dem statischen oder dynamischen lonenaustauschprinzip umsetzt, anschliessend wäscht und gegebenenfalls den polymeren Feststoff von der flüssigen oder auch gasförmigen Phase vollständig abtrennt und ihn gegebenenfalls trocknet sowie in beliebiger Reihenfolge mahlt, klassifiziert und tempert.

23. Verfahren nach Anspruch 22, dadurch gekennzeichnet, dass man den lonenaustausch in einer bewegten Suspension der polymeren Ausgangs-Ammoniumverbindung mit dem zumindest teilweise gelösten Reaktionspartner durchführt oder die Ausgangsverbindung als Austauscherbett mit der Lösung des Reaktionspartners in Kontakt bringt.

24. Verwendung der polymeren Ammoniumverbindungen als Ionenaustauscher.

## Claims

1. Polymeric ammonium compounds having a silica-like matrix consisting of units corresponding to the general formula 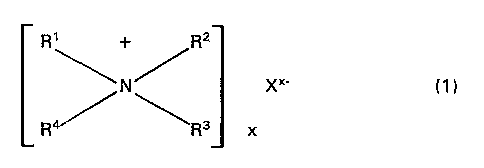
(R^{l} and R² represent a group corresponding to the general formula (2) 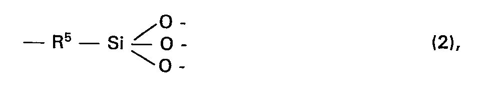
R⁵ represents alkylene having from 1 to 10 carbon atoms or cycloalkylene having from 5 to 8 carbon atoms or radicals corresponding to the formulae 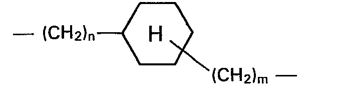 or 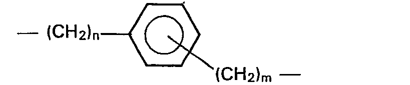
n is from 1 to 6 (attached to the nitrogen),
m is from 0 to 6 (attached to the silicon),
R' and R² are the same or different and the free valencies of the oxygen atoms are saturated
either by silicon atoms of further groups corresponding to formula (2)
or by silicon atoms of further groups corresponding to formula (2) and by cross-linking bridge members 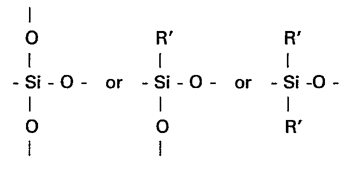 or 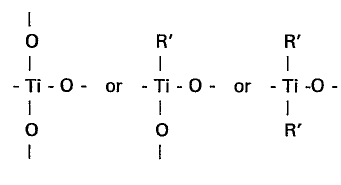 or 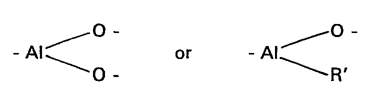
or only by cross-linking bridge members of this type; R' represents methyl or ethyl;
the ratio of the silicon atoms in (2) to the bridge atoms silicon, titanium and aluminium is from 1 : 0 to 1 : 10;
R³ and R⁴ represent R' or R² or hydrogen, a linear or branched alkyl group having from 1 to 20 carbon atoms or a cycloalkyl group having from 5 to 8 carbon atoms or a benzyl group;
X represents an inorganic or organic mono- to trivalent anion of an inorganic or organic protonic acid which is capable of forming stable salts with amine bases or the hydroxy group, and
x is from 1 to 3).

2. Polymeric ammonium compounds according to claim 1, characterised in that R is a linear or branched alkylene group.

3. Polymeric ammonium compounds according to claims 1 and 2, characterised in that X represents halide, hydroxide, hypochlorite, sulphate, hydrogen sulphate, nitrite, nitrate, phosphate, dihydrogen phosphate, hydrogen phosphate, carbonate, hydrogen carbonate, chlorate, perchlorate, chromate, dichromate, cyanide, rhodanide, sulphide, hydrogen sulphide, selenide, telluride, borate, metaborate, azide, tetrafluoroborate, tetraphenylborate, hexafluorophosphate, acetate, propionate, oxalate, trifluoroacetate, trichloroacetate or benzoate.

4. Polymeric ammonium compounds according to claims 1 to 3, characterised in that R', R² and R³ are identical to each other, also R⁴ is methyl and X is chloride, bromide or iodide.

5. Polymeric ammonium compounds according to claims 1 to 3, characterised in that R' to R⁴ are identical to each other and also X is chloride, bromide or iodide.

6. Polymeric ammonium compounds according to claims 1 to 4, consisting of polymeric units corresponding to the formula

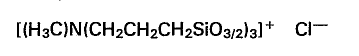

7. Polymeric ammonium compounds according to claims 1 to 3 and 5, consisting of polymer units corresponding to the formula

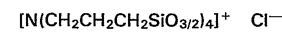

8. A process for the production of polymeric ammonium compounds having a silica-like matrix according to claims 1 to 4 and 6, characterised in that a polymeric amine base consisting of polymer units corresponding to the general formula (3) 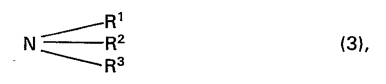 wherein R^{I} to R³ are as defined in claim 1, is reacted over a period of hours or days with stoichiometric or excess quantities of a linear or branched alkyl halide containing from 1 to 20 carbon atoms, a cycloalkyl halide containing from 5 to 8 carbon atoms or a benzyl halide or with an inorganic or organic protonic acid which is capable of forming stable quaternary salts with the amine, until all the available N atoms have been quaternised, the resulting polymeric ammonium compound is separated from the liquid phase, the remaining solids material is optionally dried under vacuum, is optionally ground and classified.

9. A process for the production of polymeric ammonium compounds according to claim 8, characterised in that quaternisation is carried out using a suspension medium, such as water, alkanes, cycloalkanes, aromatics, cyclic or open-chain ethers, chlorohydrocarbons, aliphatic or aromatic nitro compounds, aliphatic or aromatic nitriles, or dimethylformamide, or dimethyl sulphoxide, acetone, diethyl ketone, methylethylketone, lower alcohols such as methanol, ethanol and n- and i-propanol, n-, i- and t-butanol or n-pentanol or mixtures thereof, in particular water/alcohol mixtures.

10. A process for the production of polymeric ammonium compounds according to claims 8 or 9, characterised in that quaternisation is carried out below, at or above room temperature up to a temperature of 300°C under ambient or excess pressure, corresponding to the sum of the partial pressures of the individual components of the reaction mixture at the temperature used in each case.

11. A process forthe production of polymeric ammonium compound having a silica-like matrix according to claims 1 to 3, characterised in that a primary amine having a substituent consisting of a linear or branched alkylene group having from 1 to 10 carbon atoms which is bound in each case to a tri- alkoxysilyl group having alkoxy radicals containing from 1 to 5 carbon atoms, a cycloalkylene group having from 5 to 8 carbon atoms or a group 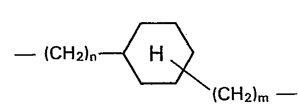 or 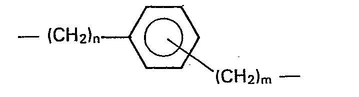
n is from 1 to 6, and
m is from 0 to 6,
is reacted, optionally in a solution aid with a halo-organyltrialkoxysilane having alkoxy groups containing from 1 to 5 carbon atoms and a linear or branched alkylene group having from 1 to 10 carbon atoms, a cycloalkylene group having from 5 to 8 carbon atoms or a group 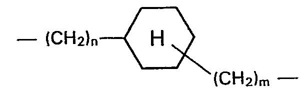 or 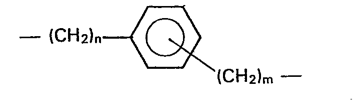
n is from 1 to 6 (attached to halogen)
m is from 0 to 6,
the resulting quaternary salt is hydrolysed and polycondensed by reaction with stoichiometric or excess quantities of water, based on quantitative hydrolysis and condensation, optionally after prior addition of a solution aid preferably in the form of an alcohol corresponding to the alkoxy groups in the Si-position in each case and/or a cross-linking agent corresponding to the general formula 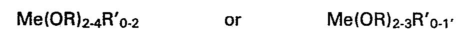
wherein,
Me is Si or Ti or AI,
R is an alkoxy radical having from 1 to 5 carbon atoms
R' is a methyl or ethyl group,
the product is separated from the liquid phase, optionally dried under vacuum and optionally ground and classified.

12. A process forthe production of polymeric ammonium compounds having a silica-like matrix according to claims 1 to 3, characterised in that a secondary bis (trialkoxysilylorganyl) amine is reacted with a halo-organyltrialkoxysilane, the organyl groups of which correspond to the group R⁵ in formula (2), or with a linear or branched alkyl halide having from 1 to 20 carbon atoms, a cycloalkylhalide having from 5 to 8 carbon atoms or a benzyl halide or with an inorganic or organic protonic acid and then the process is carried out as in claim 11.

13. A process for the production of polymeric ammonium compounds according to claims 1 to 3, characterised in that
a secondary amine having substituents consisting of a trialkoxysilylorganyl group and a linear or branched alkyl group having from 1 to 20 carbon atoms or a cycloalkyl group having from 5 to 8 carbon atoms or a benzyl group is quaternised
with a halo-trialkoxysilane, the organyl groups corresponding to the group R⁵ of claim 1,
and the process is then carried out as in claim 11.

14. A process for the production of polymeric ammonium compounds according to claims 1 to 7, characterised in that
a tertiary tris(trialkoxysilylorganyl) amine, the organyl groups of which correspond to the group R⁵ of claim 1 and the alkoxy groups of which have from 1 to 5 carbon atoms, is quaternised with
a linear or branched alkyl halide having from 1 to 20 carbon atoms or with a cycloalkyl halide having from 5 to 8 carbon atoms, with a benzyl halide or with an inorganic or organic protonic acid or with a halo-organyltrialkoxysilane, the organyl group of which corresponds to the group R⁵ of claim 1,
and the process is then carried out as in claim 11.

15. A process forthe production of polymeric ammonium compounds according to claims 1 to 4 and 6, characterised in that
a tertiary amine, the substituents of which consist of which corresponds to the group R⁵ of claim 1, and groups of which correspond to the group R⁵ of claim 1, and a linear or branched alkyl group having from 1 to 20 carbon atoms or a cycloalkyl group having from 5 to 8 carbon atoms or a benzyl group, are quaternised
with a halo-organyltrialkoxysilane, the organyl group of which corresponds to the group R⁵ of claim 1, or with a linear or branched alkyl halide having from 1 to 20 carbon atoms, a cycloalkyl halide having from 5 to 8 carbon atoms or with a benzyl halide or with inorganic or organic protonic acid
and the process is then carried out as in claim 11.

16. A process for the production of polymeric ammonium compounds according to claims 1 to 3, characterised in that
a tertiary amine, the substituents of which consist of 1 trialkoxysilylorganyl radical, the organyl group of which corresponds to the group R⁵ of claim 1, and 2 further organic radicals which may be the same or different in the form of a linear or branched alkyl group having from 1 to 20 carbon atoms and/or a cycloalkyl group having from 5 to 8 carbon atoms and/or a benzyl group, are quaternised
with a halo-organyltrialkoxysilane, the organyl group of which corresponds to the group R⁵ in claim 1, and the process is then carried out as in claim 11.
17. A process for the production of polymeric ammonium compounds according to claims 11 to 16, characterised in that the amine is quaternised using a solvent (such as cyclic or open-chain ethers, chlo- rohydrocarbon compounds, aliphatic or aromatic nitro compounds, aliphatic or aromatic nitriles or dimethyl formamide, dimethyl sulphoxide, acetone, diethylketone, methylethylketone, lower alcohols, such as methanol, ethanol, n- and i-propanol, n-, i-and t-butanol and n-pentanol or mixtures thereof).

18. A process forthe production of polymeric ammonium compounds according to claims 11 to 17, characterised in that quaternisation is carried out below, at or above room temperature up to a temperature of 300°C, under ambient or excess pressure, corresponding to the sum of the partial pressures of the individual components of the reaction mixture.

19. A process for the production of polymeric ammonium compounds according to claims 11 to 18, characterised in that the quaternary salts are hydrolysed and condensed at a temperature of from room temperature to the reflux temperature of the reaction mixture.

20. A process for the production of polymeric ammonium compounds according to claims 8 to 19, characterised in that drying is carried out at a temperature of from room temperature to 300°C, optionally under vacuum.

21. A process for the production of polymeric ammonium compounds according to claims 8 to 20, characterised in that annealing is carried out, optionally under vacuum, for a period of from at least one hour to four days at from 200 to 400°C.

22. A process for the production of the polymeric ammonium compounds according to claims 1 to 7, and those polymeric ammonium compounds in which R³ and/or R⁴ do not represent hydrogen and in which the anion is simultaneously not halide, characterised in that the quaternised, undried and/or annealed, polymeric ammonium compounds which have been completely substituted by organyl and/or organylsilyl groups or only partially substituted by organosilyl groups are reacted with an inorganic or organic reagent which can dissociate into a cation and an anion, for the mutual exchange of the anions according to the statistical or dynamic principle of ion exchange, are then washed and the polymeric solids material is completely separated from the liquid or even gaseous phase and is optionally dried and ground, classified and annealed in any order.

23. A process according to claim 22, characterised in that the ion exchange is carried out in an agitated suspension of the polymeric starting ammonium compound with the reaction constituent which has been at least partially dissolved or the starting compound, as the exchanger bed, is brought into contact with the solution of the reaction constituent.

24. The use of the polymeric ammonium compounds as ion exchangers.

## Revendications

1. Composés d'ammonium polymères à structure de base du type acide silicique, formés à partie d'unités de formule générale: 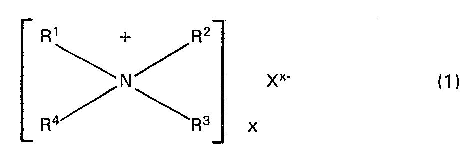
R^{I} et R² = un groupe de formule générale (2): 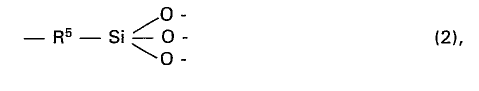
R⁵ = un alcoyle avec 1 à 10 atomes de C ou un cycloalcoyle avec 5 à 8 atomes de C ou un reste de formule: 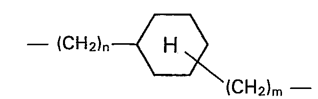 ou 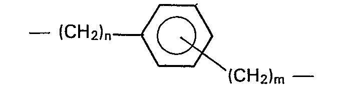
n = 1 à 6 (sur l'azote)
m = 0 à 6 (sur le silicium).
R' et R² sont identiques ou différents, les valences libres des atomes d'oxygène étant saturées, soit par des atomes de silicium d'autres groupes de formule (2),
soit par des atomes de silicium d'autres groupes de formule (2) et par des éléments de pont réticulants, 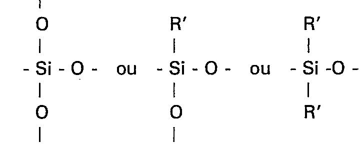 ou 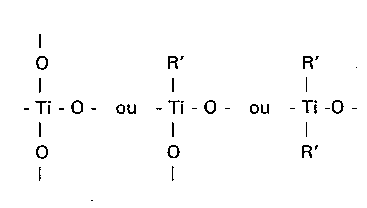 ou 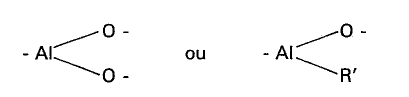
ou seulement par des éléments de pont réticulants de ce type;
R' = méthyle ou éthyle;
rapport des atomes de silicium dans (2) aux atomes de pont silicium, titane, aluminium = 1 : 0 à 1 : 10;
R³ et R⁴ = R' ou R² ou de l'hydrogène, un groupe alcoyle linéaire ou ramifié avec 1 à 20 atomes de C ou un groupe cycloalcoyle avec 5 à 8 atomes de carbone ou le groupe benzyle; X = un anion mono- à trivalent minéral ou organique, d'un acide protonique minéral ou organique, apte à former des sels stables avec des bases amines ou le groupe hydroxyle, et x = 1 à 3.

2. Composés selon la revendication 1, caractérisés en ce que R⁵ est un groupe alkoylène linéaire ou ramifié.

3. Composés selon les revendications 1 et 2, caractérisés en ce que X désigne un halogénure, hydroxyle, hypochlorite, sulfate, sulfhydrate, nitrite, nitrate, phosphate, dihydrogénophosphate, hydro- génophosphate, carbonate, carbonate acide, chlorate, perchlorate, chromate, dichromate, cyanure, sulfocyanure, sulfure, hydrogénosulfure, séléniure, tellure, borate, métaborate, azide, tétrafluoroborate, tétraphénylborate, hexafluorophosphate, acétate, propionate, oxalate, trifluoroacétate, trichloroacé- tate ou benzoate.

4. Composés selon les revendications 1-3, caractérisés en ce que R^{I}, R² et R³ sont identiques entre eux, R⁴ est un méthyle et X un chlore, brome ou iode.

5. Composés selon les revendications 1 à 3, caractérisés en ce que R^{I} à R⁴ sont identiques entre eux et X est un chlore, brome ou iode.

6. Composés selon les revendications 1 à 4, constitués par des unités polymères de formule:

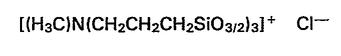

7. Composés selon les revendications 1 à 3 et 5, constitués par des unités polymères de formule

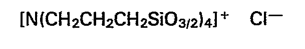

8. Procédé de préparation des composés d'ammonium polymères avec une structure de base du type acide silicique selon les revendications 1 à 4 et 6, caractérisé en ce qu'une base amine polymère, constituée par des unités polymères de formule (3): 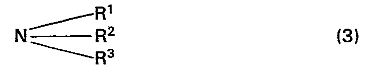
dans laquelle R^{I} à R³ ont la même signification que dans la revendication 1, est amenée, à réagir, en l'espace de quelques heures ou de jours, avec une quantité stoechiométrique ou en excès,
d'un halogénure d'alcoyle linéaire ou ramifié, renfermant 1 à 20 atomes de C, un halogénure de cycloalcoyle ou halogénure de benzyle renfermant 5 à 8 atomes de carbone ou avec un acide protonique minéral ou organique apte à former avec l'amine un sel quaternaire stable, jusqu'à quaternisation de tous les atomes d'azote accessibles,
que le composé d'ammonium polymère formé est séparé de la phase liquide, la matière solide obtenue est séchée, éventuellement sous vide, et qu'elle est éventuellement broyée et classée par grosseurs.

9. Procédé selon la revendication 8, caractérisé en ce que la quaternisation est effectuée en utilisant, pour la mise en suspension un milieu comme l'eau, les alcanes, cycloalcanes, composés aromatiques, éthers cycliques ou à chaîne linéaire, hydrocarbures chlorés, composés nitro aliphatiques ou aromatiques, nitriles aliphatiques ou aromatiques, ou les diméthylformamide, diméthylsulfoxyde, acétone, diéthylcétone, méthyléthylcétone, alcools inférieurs comme les méthanol, éthanol, n- et i-propanols, n-, i- et t-butanols, ou le n-pentanol, ou leurs mélanges en particulier les mélanges eau/alcool.

10. Procédé selon les revendications 8 ou 9, caractérisé en ce que la quaternisation est effectuée à une température située dans une zone comprise entre une température inférieure, égale ou supérieure à la température ambiante, et 300°C, sous la pression ordinaire ou sous une pression plus élevée correspondant, à la température donnée, à la somme des pressions partielles des composés individuels du mélange réactionnel.

11. Procédé de préparation de composés d'ammonium polymères avec une structure de base du type acide silicique, selon les revendications 1 à 3, caractérisé en ce que:
l'on fait réagir une amine primaire avec un substituant d'un groupe alkylène renfermant 1 à 10 atomes de C, linéaire ou ramifié, lié à un reste alcoxy contenant toujours un groupe trialcoxysilyle avec 1 à 5 atomes de carbone, d'un groupe cycloalkylène avec 5 à 8 atomes de C ou d'un groupe: 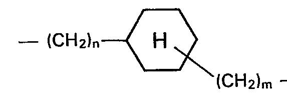 ou 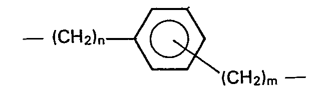
où n = 1 à 6
m = 0 à ₆
éventuellement dans un solubilisant,
avec un organyltrialcoxysilane halogéné, avec un groupe alcoxy contenant 1 à 6 atomes de carbone, le groupe organyl mis en oeuvre étant un groupe alkylène linéaire ou ramifié, avec 1 à 10 atomes de C, un groupe cycloalkylène avec 5 à 8 atomes de C ou un groupe: 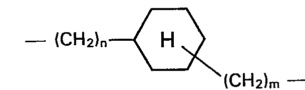 ou 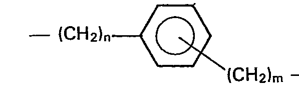
où n = 1 à 6 (sur l'halogène)
m = 0 à 6
que l'on hydrolyse et polycondense le sel quaternaire formé par réaction avec une proportion stoechiométrique ou en excès d'eau calculée sur l'hydrolyse et la condensation quantitatives, éventuellement après addition préalable d'un solubilisant, de préférence sous la forme d'un alcool correspondant au groupe alcoxy lié à Si, et/ou d'un réticulant de formule générale 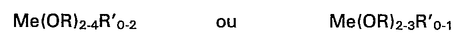
où Me = Si ou Ti ou AI,
R est un reste alcoxy avec 1 à 5 atomes de C et R' un groupe méthyle ou éthyle,
que l'on sépare le produit de la phase liquide, le sèche, éventuellement sous vide, et le cas échéant le broie et le classe par grosseurs.

12. Procédé de préparation de composés d'ammonium polymères avec une structure de base du type acide silicique selon les revendications 1 à 3, caractérisé en ce que:
l'on fait réagir une bis(trialcoxysilylorganyl)amine secondaire avec
un organyltrialcoxysilane halogéné, dont les groupes organyle R⁵ correspondent à la formule (2), ou un halogénure d'alcoyle linéaire ou ramifié, contenant 1 à 20 atomes de C, un halogénure de cycloalcoyle contenant 5 à 8 atomes de C, ou un halogénure de benzyle, ou avec un acide protonique minéral ou organique
et l'on procède ensuite selon la revendication 11.

13. Procédé de préparation de composés d'ammonium polymères selon les revendications 1-3, caractérisé en ce que l'on quaternise une amine secondaire avec des substituants constitués par un groupe trialcoxysilylorganyl et un groupe alcoyle linéaire ou ramifié contenant 1 à 20 atomes de C, ou un groupe cycloalcoyle contenant 5 à 8 atomes de C ou un groupe benzyle,
avec un organyltrialcoxysilane halogéné, les groupes organyle correspondant au groupe R⁵ de la revendication 1.

14. Procédé de préparation de composés d'ammonium polymères selon les revendications 1 à 7, caractérisé en ce que l'on quaternise une amine tris(trialcoxysilylorganyle) tertiaire dont les groupes organyle correspondent au groupe R⁵ de la revendication 1, et dont les groupes alcoxy présentent 1 à 5 atomes de C, avec un halogénure d'alcoyle linéaire ou ramifié, contenant 1 à 20 atomes de C, ou avec un halogénure de cycloalcoyle contenant 5 à 8 atomes de C, avec un halogénure de benzyle ou avec un acide protonique minéral ou organique ou avec un organyltrialcoxysilane halogéné, dont le groupe organyle correspond au groupe R⁵ de la revendication 1, et qu'ensuite on procède selon la revendication 11.

15. Procédé de préparation de composés d'ammonium polymères selon les revendications 1 à 4 et 6, caractérisé en ce que l'on quaternise une amine tertiaire dont les substituants sont constitués par 2 restes trialcoxysilylorganyle, dont les groupes organyle correspondent au groupe R⁵ de la revendication 1, et un groupe alcoyle linéaire ou ramifié, contenant 1 à 20 atomes de C ou un groupe cycloalcoyle contenant 5 à 8 atomes de C ou le groupe benzyle, avec un organyltrialcoxysilane halogéné dont le groupe organyle correspond au groupe R⁵ de la revendication 1, ou avec un halogénure d'alcoyle linéaire ou ramifié contenant 1 à 20 atomes de C, un halogénure de cycloalcoyle contenant 5 à 8 atomes de C, ou avec un halogénure de benzyle ou avec un acide protonique minéral ou organique et qu'ensuite on opère selon la revendication 11.

16. Procédé de préparation de composés d'ammonium polymères selon les revendications 1 à 3, caractérisé en ce que

l'on quaternise une amine tertiaire dont les substituants sont constitués par 1 reste trialcoxysilyl organyle dont le groupe organyle correspond au groupe R⁵ de la revendication 1, et 2 autres restes organiques identiques ou différents, sous la forme d'un groupe alcoyle linéaire ou ramifié, contenant 1 à 20 atomes de C et/ou un groupe cycloalcoyle contenant 5 à 8 atomes de C et/ou un groupe benzyle, avec un organyltrialcoxysilane halogéné dont le groupe organyle correspond au groupe R⁵ de la revendication 1,
et qu'ensuite on procède selon la revendication 11.

17. Procédé de préparation de composés d'ammonium polymères selon les revendications 11 à 16, caractérisé en ce que la quaternisation de l'amine est effectuée en utilisant un solvant (tel que les éthers cycliques ou à chaîne linéaire, les hydrocarbures chlorés, les composés nitro aliphatiques ou aromatiques, les nitriles aliphatiques ou aromatiques ou les diméthylformamide, diméthylsulfoxyde, acétone, diéthylcétone, méthyléthylcétone, les alcools inférieurs comme les méthanol, éthanol, n- et i-propanol, n-, i- et t-butanol ou n-pentanol, ou leurs mélanges).

18. Procédé de préparation de composés d'ammonium polymères selon les revendications 11 à 17, caractérisé en ce que la quaternisation est effectuée à une température comprise dans une zone allant d'une température inférieure, égale ou supérieure à la température ambiante jusqu'à 300°C, sous la pression ordinaire et sous une pression plus élevée correspondant à la somme des pressions partielles des composants du mélange réactionnel.

19. Procédé de préparation de composés d'ammonium polymères selon les revendications 11 à 18, caractérisé en ce que l'hydrolyse et la condensation du sel quaternaire sont effectués à une température comprise entre la température ambiante et la température de reflux du mélange réactionnel.

20. Procédé de préparation de composés d'ammonium polymères selon les revendications 8 à 19, caractérisé en ce que l'on sèche éventuellement sous vide, entre la température ambiante et 300°C.

21. Procédé de préparation de composés d'ammonium polymères selon les revendications 8 à 20, caractérisé en ce que l'on effectue un traitement thermique, éventuellement sous vide, pendant au moins une heure à 4 jours, entre 200 et 400°C.

22. Procédé de préparation de composés d'ammonium polymères selon les revendications 1 à 7 et de tous composés d'ammonium polymères dans lesquels R³ et/ou R⁴ ne représentent pas un hydrogène et en même temps l'anion n'est pas un halogénure, procédé caractérisé en ce que l'on fait réagir le composé d'ammonium polymère quaternisé, non séché, séché et/ou traité thermiquement, complètement substitué par des groupes organyle et organosilyle ou même complètement substitué avec des groupes organosilyle, avec un réactif minéral ou organique qui peut se dissocier en un cation et un anion, pour un échange réciproque des anions selon le principe de l'échange d'ions statistique ou dynamique, qu'ensuite on lave et qu'éventuellement on sépare complètement de la matière solide polymère de la phase liquide ou même gazeuse, qu'éventuellement on sèche ce solide et le broie, le classe par grosseurs et le traite thermiquement, dans un ordre quelconque.

23. Procédé selon la revendication 22, caractérisé en ce que l'échange d'ions est effectué dans une suspension agitée du composé d'ammonium polymère de départ avec le partenaire réactionnel au moins partiellement dissous, ou que le composé de départ est mis en contact, sous forme de lit d'échange, avec la solution du partenaire réactionnel.

24. Utilisation des composés d'ammonium polymères comme échangeurs d'ions.
